# EUROPEAN PATENT APPLICATION

(11) **EP 4 604 281 A1**
(43) Date of publication of application: **20.08.2025**
(21) Application number: 23877339.4
(22) Date of filing: 12.10.2023
(51) Int. Cl.: H01M 50/122, H01G 2/10, H01G 11/80, H01M 50/105, H01M 50/117, H01M 50/119, H01M 50/121, H01M 50/129, H01M 50/131, H01M 50/184, H01M 50/186, H01M 50/193, H01M 50/474, H01M 50/483, H01M 50/486, H01M 50/489, H01M 50/531, H01M 50/553

(54) **RESIN FILM FOR POWER STORAGE DEVICE, AND POWER STORAGE DEVICE**

(30) Priority: 12.10.2022 JP 2022164358
(71) Applicant: Dai Nippon Printing Co., Ltd., Tokyo 162-8001 (JP)
(72) Inventor: KAGATA, Tsubasa, Tokyo 162-8001 (JP); SASAKI, Miho, Tokyo 162-8001 (JP); TAKEUCHI, Naoya, Tokyo 162-8001 (JP)
(74) Representative: Müller-Boré & Partner Patentanwälte PartG mbB
(86) International application number: PCT/JP2023/037091
(87) International publication number: WO 2024/080338

(57) **Abstract**

This resin film for a power storage device is constituted of two or more layers, and said two or more layers comprise: at least one layer of a layer A having a content of a water absorbent of at least 5 mass%; and at least one layer of a layer B having a content of water absorbent of less than 5 mass%.

## Description

### Technical Field

The present disclosure relates to a resin film for electrical storage devices and an electrical storage device.

### Background Art

Various types of electrical storage devices have been developed heretofore, and in every electrical storage device, an exterior material is an essential member for sealing electrical storage device elements such as an electrode and an electrolyte. Metallic exterior materials have been often used heretofore as exterior materials for electrical storage devices.

On the other hand, in recent years, electrical storage devices have been required to be diversified in shape and to be thinned and lightened with improvement of performance of electric cars, hybrid electric cars, personal computers, cameras, mobile phones and so on. However, metallic exterior material for electrical storage devices that have often been heretofore used have the disadvantage that it is difficult to keep up with diversification in shape, and there is a limit on weight reduction.

Thus, heretofore a film-shaped laminate with a base material layer, a barrier layer, an adhesive layer and a heat-sealable resin layer laminated in this order has been proposed as an exterior material for electrical storage devices which is easily processed into diversified shapes and is capable of achieving thickness reduction and weight reduction (see, for example, PTL 1).

In such an exterior material for electrical storage devices, generally, a concave portion is formed by cold molding, electrical storage device elements such as an electrode and an electrolytic solution are disposed in a space formed by the concave portion, and heat-sealable resin layers are heat-sealed to obtain an electrical storage device with electrical storage device elements housed in the exterior material for electrical storage devices.

### Citation List

### Patent Literature

PTL 1: Japanese Patent Laid-open Publication No. 2008-287971

### Summary of Invention

### Technical Problem

Ingress of moisture into an electrical storage device element deteriorates the performance of the electrical storage device. For this reason, for example, when the above-described film-shaped laminate is used as an exterior material, a barrier layer (including, for example, a metal foil) is provided. By providing a barrier layer, ingress of moisture from the outside of the barrier layer can be suppressed.

However, when a heat-sealable resin layer of the exterior material is heat-sealed to seal an electrical storage device element, ingress of moisture from an end surface of the heat-sealable resin layer may occur because the end surface of the heat-sealable resin layer is exposed to the outside.

If the heat-sealable resin layer of the exterior material absorbs water before the electrical storage device element is sealed with the exterior material, moisture in the heat-sealable resin layer may enter the electrical storage device element after the electrical storage device element is sealed.

In addition, some of members that are used for electrical storage devices are required to have excellent insulation quality.

Under these circumstances, a main object of the present disclosure is to provide a resin film for electrical storage devices which has excellent insulation quality and suppresses ingress of moisture into an electrical storage device element.

### Solution to Problem

The inventors of the present disclosure have extensively conducted studies for solving the above-described problems. As a result, it has been found that a resin film for electrical storage devices, which includes two or more layers and in which the content of a water absorbent in at least one of the two or more layers is set to 5 mass% or more, and the content of the water absorbent in at least one of the two or more layers is set to less than 5 mass%, has excellent insulation quality and can suppress ingress of moisture into an electrical storage device element.

The present disclosure has been completed by further conducting studies based on the above-mentioned findings. That is, the present disclosure provides an invention of an aspect as described below.

A resin film for electrical storage devices, including two or more layers, in which
the two or more layers include at least one layer A having a water absorbent content of 5 mass% or more, and at least one layer B having a water absorbent content of less than 5 mass%.

### Advantageous Effects of Invention

According to the present disclosure, it is possible to provide a resin film for electrical storage devices which has excellent insulation quality and suppresses ingress of moisture into an electrical storage device element. According to the present disclosure, it is also possible to provide an electrical storage device utilizing the technique.

### Brief Description of Drawings

[Fig. 1] Fig. 1 is a schematic diagram showing an example of a cross-sectional structure of a resin film for electrical storage devices according to the present disclosure.
[Fig. 2] Fig. 2 is a schematic diagram showing an example of a cross-sectional structure of a resin film for electrical storage devices according to the present disclosure.
[Fig. 3] Fig. 3 is a schematic diagram showing an example of a cross-sectional structure of an exterior material for electrical storage devices according to the present disclosure.
[Fig. 4] Fig. 4 is a schematic diagram showing an example of a cross-sectional structure of an electrical storage device of the present disclosure.
[Fig. 5] Fig. 5 is a schematic diagram showing an example of a cross-sectional structure of an electrical storage device of the present disclosure.
[Fig. 6] Fig. 6 is a schematic diagram showing an example of a cross-sectional structure of an electrical storage device of the present disclosure.
[Fig. 7] Fig. 7 is a schematic diagram showing an example of a cross-sectional structure of an electrical storage device of the present disclosure.
[Fig. 8] Fig. 8 is a schematic diagram showing an example of a cross-sectional structure of an electrical storage device of the present disclosure.
[Fig. 9] Fig. 9 is a schematic diagram showing an example of a cross-sectional structure of an electrical storage device of the present disclosure.
[Fig. 10] Fig. 10 is a schematic perspective view showing an example of an electrical storage device of the present disclosure.
[Fig. 11] Fig. 11 is a schematic diagram showing an example of a cross-sectional structure of an electrical storage device of the present disclosure.

### Description of Embodiments

A resin film for electrical storage devices includes two or more layers, in which the two or more layers include at least one layer A having a water absorbent content of 5 mass% or more, and at least one layer B having a water absorbent content of less than 5 mass%. The resin film for electrical storage devices according to the present disclosure, which has such a configuration, thus has excellent insulation quality, and can suppress ingress of moisture into the electrical storage device element.

Hereinafter, the resin film for electrical storage devices according to the present disclosure will be described in detail. In the present disclosure, a numerical range indicated by the term "A to B" means "A or more" and "B or less". For example, the expression of "2 to 15 mm" means 2 mm or more and 15 mm or less.

In addition, examples of the method for identifying MD of the resin film for electrical storage devices include a method in which a cross-section of the resin film for electrical storage devices (e.g., a cross-section of an acid-modified polyolefin layer or a polyolefin layer) is observed with an electron microscope to identify a sea-island structure. In the method, the direction parallel to a cross-section in which the average of the diameters of the island shapes in a direction perpendicular to the thickness direction of the resin film for electrical storage devices is maximum can be determined as MD. Specifically, a length-direction cross-section of the resin film for electrical storage devices and cross-sections (a total of 10 cross-sections) at angular intervals of 10 degrees from a direction parallel to the length-direction cross-section to a direction perpendicular to the length-direction cross-section are observed with an electron microscope photograph to examine sea-island structures. Next, in each cross-section, the shape of each island is observed. For the shape of each island, the linear distance between the leftmost end in a direction perpendicular to the thickness direction of the resin film for electrical storage devices and the rightmost end in the perpendicular direction is defined as a diameter y. In each cross-section, the average of the top 20 diameters y in descending order of the diameter y of the island shape is calculated. The direction parallel to a cross-section having the largest average of the diameters y of the island shapes is determined as MD. For example, the heat shrinkage ratio after the resin film for electrical storage devices is left standing in an environment at 150°C for 2 minutes is measured, and a direction in which a larger shrinkage ratio is obtained is determined as MD.

### 1. Resin film for electrical storage devices

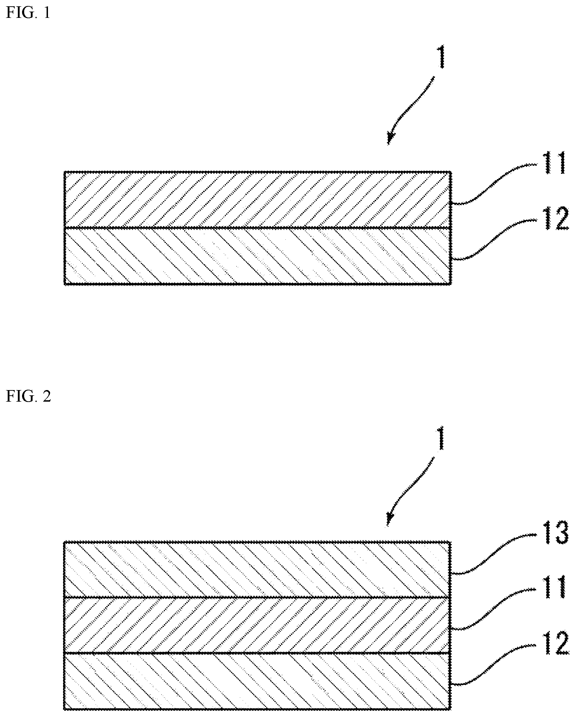

The resin film for electrical storage devices according to the present disclosure includes two or more layers. The two or more layers include at least one layer A having a water absorbent content of 5 mass% or more, and at least one layer B having a water absorbent content of less than 5 mass%. In Figs. 1 and 2, of the two or more layers, the layer A having a water absorbent content of 5 mass% or more is a first layer 11, and the layer B having a water absorbent content of less than 5 mass% is a second layer 12. In Fig. 2, a third layer 13 is the layer B having a water absorbent content of less than 5 mass%.

Since the resin film for electrical storage devices according to the present disclosure has excellent insulation quality, and can suppress ingress of moisture into the electrical storage device element, the resin film can be preferably used as a resin film for electrical storage devices. For example, a resin film 1 for electrical storage devices is suitable for 1) an application in which the resin film for electrical storage devices is disposed between an exterior material for electrical storage devices and an electrical storage device element, 2) an application in which the resin film for electrical storage devices is used as a heat-sealable resin layer of an exterior material for electrical storage devices, 3) an application in which the resin film for electrical storage devices is used as an adhesive layer between a barrier layer and a heat-sealable resin layer of an exterior material for electrical storage devices, or 4) an application in which the resin film for electrical storage devices is used as an adhesive film for metal terminal which is interposed between a metal terminal electrically connected to an electrode of an electrical storage device element and an exterior material for electrical storage devices which seals the electrical storage device element. Further, the resin film for electrical storage devices can also be used with the resin film interposed between heat-sealable resin layers of the exterior material for electrical storage devices at a location where the heat-sealable resin layers are heat-sealed.

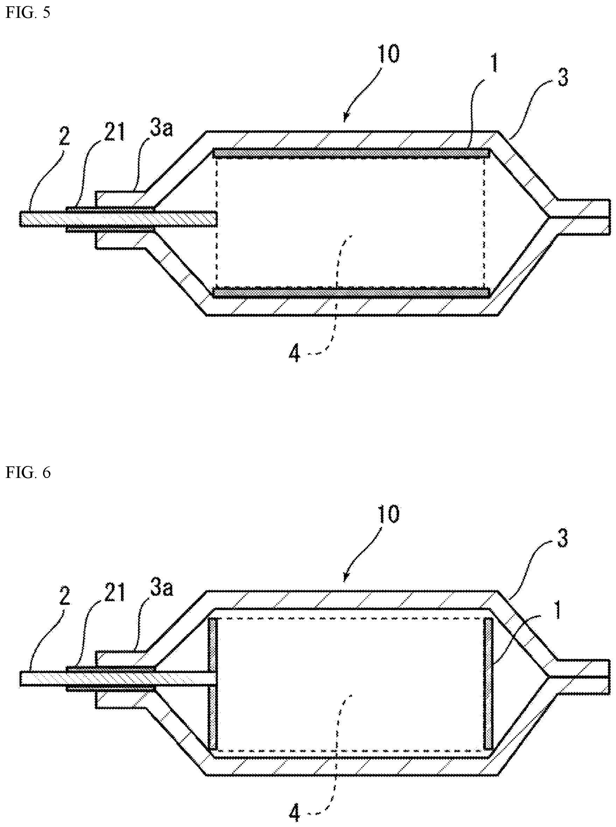

1) For the application in which the resin film for electrical storage devices according to the present disclosure is disposed between the exterior material for electrical storage devices and the electrical storage device element, the resin film 1 for electrical storage devices is disposed between an exterior material 3 and an electrical storage device element 4 of an electrical storage device 10 as shown in the schematic views of Figs 5 to 9.

As described above, ingress of moisture into an electrical storage device element deteriorates the performance of the electrical storage device, and therefore the film-shaped exterior material is provided with a barrier layer (including, for example, a metal foil). By providing a barrier layer, ingress of moisture from the outside of the barrier layer can be suppressed. However, when a heat-sealable resin layer of the exterior material is heat-sealed to seal an electrical storage device element, ingress of moisture from an end surface of the heat-sealable resin layer may occur because the end surface of the heat-sealable resin layer is exposed to the outside. If the heat-sealable resin layer of the exterior material absorbs water before the electrical storage device element is sealed with the exterior material, moisture in the heat-sealable resin layer may enter the electrical storage device element after the electrical storage device element is sealed.

To address this, the resin film 1 for electrical storage devices according to the present disclosure is disposed between the exterior material 3 of the electrical storage device 10 and the electrical storage device element 4 to effectively suppress ingress of moisture from an end part of the heat-sealable resin layer of the exterior material and ingress of moisture contained in the heat-sealable resin layer of the exterior material into the electrical storage device element. That is, since the resin film 1 for electrical storage devices according to the present disclosure contains a water absorbent, the resin film 1 for electrical storage devices can absorb and hold moisture entering from the heat-sealable resin layer of the exterior material to inhibit moisture from reaching the electrical storage device element 4. Further, since the resin film 1 for electrical storage devices according to the present disclosure, which includes the layer B having a water absorbent content of less than 5 mass%, the resin film can secure excellent insulation quality.

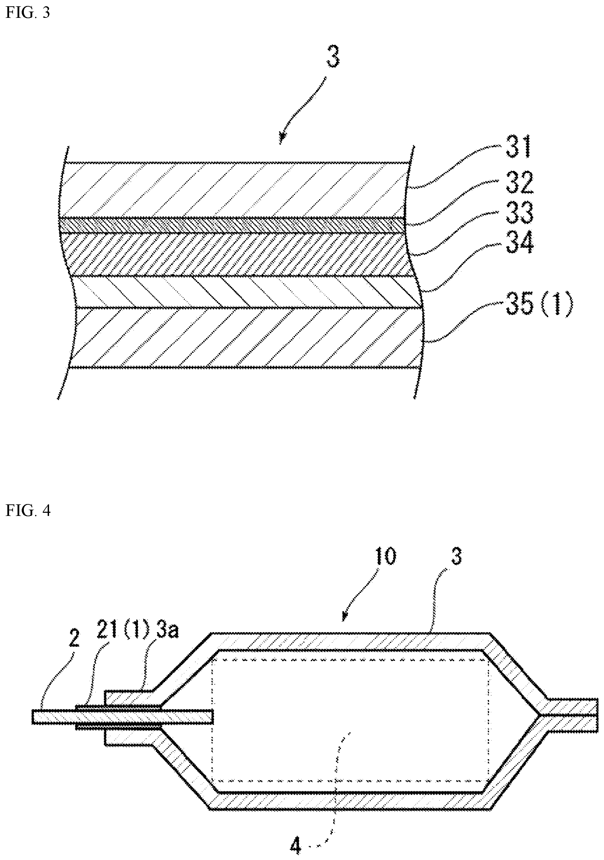

For the 2) application in which the resin film 1 for electrical storage devices according to the present disclosure is used as a heat-sealable resin layer of an exterior material for electrical storage devices, the resin film 1 for electrical storage devices according to the present disclosure is used as a heat-sealable resin layer 35 of the exterior material 3 for electrical storage devices which includes a laminate including at least a base material layer 31, a barrier layer 33, and the heat-sealable resin layer 35 in the stated order as shown in Fig. 3. For the 3) application in which the resin film 1 for electrical storage devices according to the present disclosure is used as an adhesive layer between a barrier layer and a heat-sealable resin layer of an exterior material for electrical storage devices, the resin film 1 for electrical storage devices according to the present disclosure is used as an adhesive layer 34 of the exterior material 3 for electrical storage devices which includes a laminate including at least the base material layer 31, the barrier layer 33, the adhesive layer 34 and the heat-sealable resin layer 35 in the stated order as shown in Fig. 3.

As described above, when the heat-sealable resin layer of the exterior material is heat-sealed to seal an electrical storage device element, ingress of moisture from an end surface of the heat-sealable resin layer may occur because the end surface of the heat-sealable resin layer is exposed to the outside. If the heat-sealable resin layer of the exterior material absorbs water before the electrical storage device element is sealed with the exterior material, moisture in the heat-sealable resin layer may enter the electrical storage device element after the electrical storage device element is sealed. The same applies to the adhesive layer located between the barrier layer and the heat-sealable resin layer.

To address this, the resin film 1 for electrical storage devices according to the present disclosure is used as the heat-sealable resin layer or the adhesive layer of the exterior material 3 to effectively suppress ingress of moisture from an end part of the heat-sealable resin layer of the exterior material and ingress of moisture contained in the heat-sealable resin layer or the adhesive layer of the exterior material into the electrical storage device element. That is, since the resin film 1 for electrical storage devices according to the present disclosure contains a water absorbent, the resin film 1 for electrical storage devices can absorb and hold moisture entering from the heat-sealable resin layer of the exterior material to inhibit moisture from reaching the electrical storage device element 4. Further, since the resin film 1 for electrical storage devices according to the present disclosure, which includes the layer B having a water absorbent content of less than 5 mass%, the resin film can secure excellent insulation quality.

For the 4) application in which the resin film 1 for electrical storage devices according to the present disclosure is used as an adhesive film for metal terminal which is interposed between a metal terminal electrically connected to an electrode of an electrical storage device element and an exterior material for electrical storage devices which seals the electrical storage device element, the resin film 1 for electrical storage devices is used as an adhesive film 21 for metal terminal as shown in Fig. 4.

Since the end surface of the adhesive film for metal terminal is exposed to the outside, moisture may enter from the end surface of the adhesive film for metal terminal. If the adhesive film for metal terminal absorbs water before the adhesive film for metal terminal is interposed between the metal terminal and the exterior material for electrical storage devices, moisture in the adhesive film for metal terminal may enter the electrical storage device element after the adhesive film for metal terminal is interposed between the metal terminal and the exterior material for electrical storage devices.

To address this, the resin film 1 for electrical storage devices according to the present disclosure is used as the adhesive film for metal terminal to effectively suppress ingress of moisture from an end part of the adhesive film for metal terminal and ingress of moisture contained in the adhesive film for metal terminal. That is, since the resin film 1 for electrical storage devices according to the present disclosure contains a water absorbent, the resin film 1 for electrical storage devices can absorb and hold moisture entering from the adhesive film for metal terminal to inhibit moisture from reaching the electrical storage device element 4. Further, since the resin film 1 for electrical storage devices according to the present disclosure, which includes the layer B having a water absorbent content of less than 5 mass%, the resin film can secure excellent insulation quality.

In the present disclosure, the moisture to be absorbed is moisture from gas and/or liquid. The moisture to be absorbed generates various kinds of outgas when absorbed by, for example, a solid electrolyte-type lithium ion battery.

As shown in, for example, Figs. 4 to 11, the electrical storage device 10 has a structure in which the electrical storage device element 4 is sealed with the exterior material 3. A metal terminal 2 protrudes to the outside of the exterior material 3. The metal terminal 2 is connected to each of a positive electrode and a negative electrode of the electrical storage device element 4. An adhesive film 21 for metal terminal is disposed between the metal terminal 2 and the exterior material 3 to enhance adhesion between the metal terminal 2 and a heat-sealable resin layer 35 of the exterior material. The electrical storage device 10 is sealed by covering the electrical storage device element 4 with the exterior material 3 in such a manner as to allow formation of a flange portion of the exterior material 3 (a peripheral edge portion 3a of the exterior material 3) on the peripheral edge of the electrical storage device element 4, and heat-sealing the flange portion of the exterior material 3 to perform tight sealing. When the electrical storage device element 4 is housed using the exterior material 3, the heat-sealable resin layer 35 of the exterior material 3 is on the inner side (a surface contacting the electrical storage device element 4). When the resin film 1 for electrical storage devices according to the present disclosure is used as an adhesive film for metal terminal, for example, coloring of the adhesive film for metal terminal enables adhesive film for metal terminal to be disposed between the metal terminal and the exterior material for electrical storage devices with high positional accuracy. It is preferable that the layer forming a surface of the adhesive film for metal terminal on the metal terminal side is made from an acid-modified polyolefin. This enables enhancement of the adhesion of the adhesive film for metal terminal to the metal terminal.

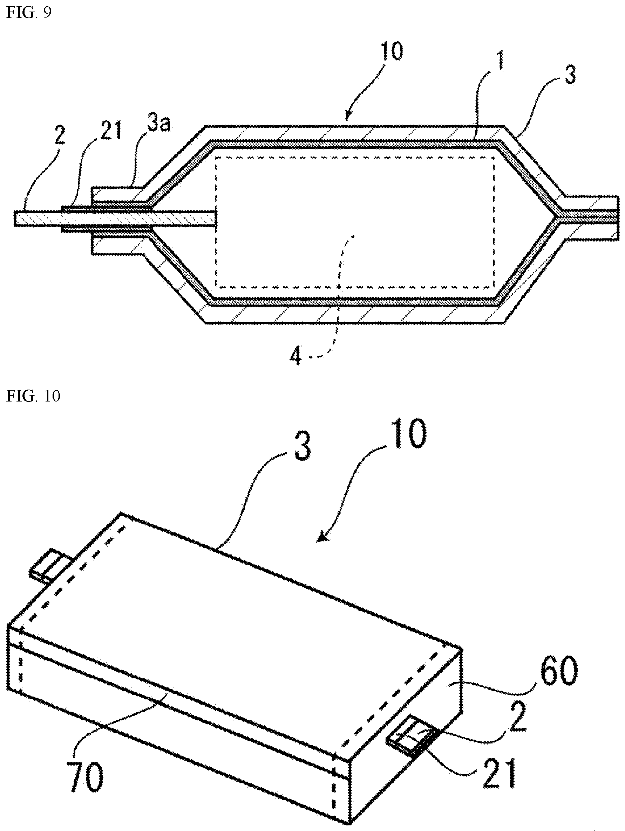

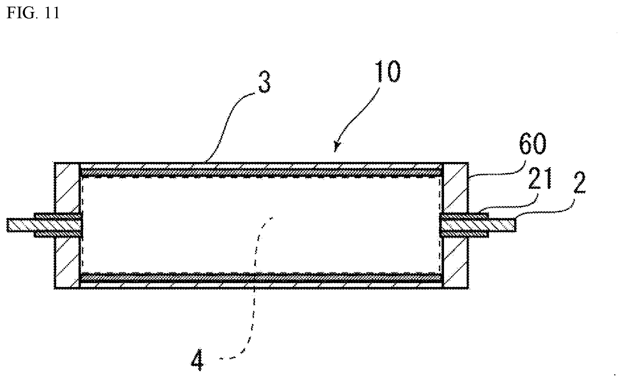

As shown in Figs. 10 and 11, the exterior material 3 for electrical storage devices is wound around the circumference of the electrical storage device element 4 (circumferential winding) (rectangular parallelepiped shape in Figs. 10 and 11) such that the heat-sealable resin layer of the exterior material 3 is on the inner side, the heat-sealable resin layers are heat-sealed to each other to form a heat-sealed portion 70, and a lid 60 is disposed so as to close the openings at both ends. The resin film 1 for electrical storage devices according to the present disclosure may be disposed between the exterior material 3 in which the resin film for electrical storage devices is circumferentially wound and the electrical storage device element 4, between a lid 60 of the exterior material 3 of the electrical storage device and the electrical storage device element 4. Here, the lid 60 forms a part of the exterior material 3 for electrical storage devices, and the resin film 1 for electrical storage devices according to the present disclosure is disposed between the exterior material 3 and the electrical storage device element 4. The lid 60 may be composed of one member or a plurality of members.

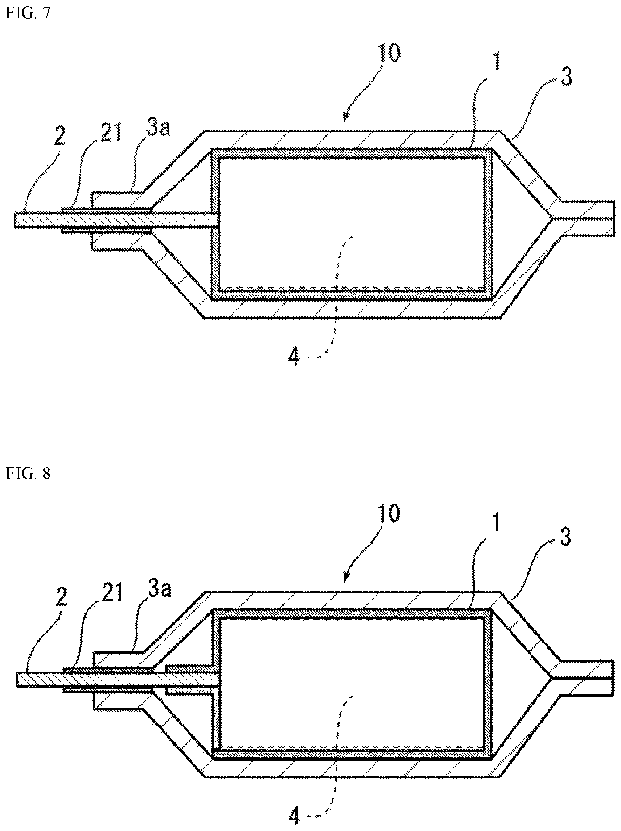

For the 1) application in which the resin film for electrical storage devices is disposed between the exterior material for electrical storage devices and the electrical storage device element, the resin film 1 for electrical storage devices according to the present disclosure may be located on the whole of a surface of the exterior material 3 on the electrical storage device element 4 side (heat-sealable resin layer 35 side), or may be located on a part of the surface on the electrical storage device element 4 side (heat-sealable resin layer 35 side). From the viewpoint of suitably exhibiting the effect of the present disclosure, it is preferable that the resin film 1 for electrical storage devices is disposed between the exterior material 3 of the electrical storage device 10 and the electrical storage device element 4 in such a manner as to be located on the whole of a surface of the exterior material 3 on the electrical storage device element 4 side (heat-sealable resin layer 35 side) (see Figs. 5 to 9). For example, the resin film 1 for electrical storage devices may be disposed only between the exterior material 3 for electrical storage devices and the electrical storage device element 4 as shown in Fig. 5, or may be disposed between the exterior material peripheral edge portion 3a (heat-sealed portion) of the exterior material 3 and the electrical storage device element 4 as shown in Fig. 6, or the electrical storage device element 4 may be covered with the resin film 1 for electrical storage devices as shown in Fig. 7, and a part of a surface of the metal terminal 2 may be further covered with the resin film 1 for electrical storage devices as shown in Fig. 8. Further, as shown in Fig. 9, it is also possible to dispose the resin film 1 for electrical storage devices according to the present disclosure between the exterior material 3 of the electrical storage device 10 and the electrical storage device element 4 such that the electrical storage device element 4 is sealed by the resin film 1 for electrical storage devices. The resin film 1 for electrical storage devices may be present between the exterior material 3 and the metal terminal 2 in a state of being hear-sealed.

When the resin film 1 for electrical storage devices is located at the flange portion of the exterior material 3 (the peripheral edge portion 3a of the exterior material 3), it is preferable that the resin film 1 for electrical storage devices has a heat-sealing property. For example, in the schematic diagram of Fig. 9, the resin film 1 for electrical storage devices is located at the flange portion to which the exterior material 3 is heat-sealed, and therefore it is preferable that the resin film 1 for electrical storage devices has a property of being heat-sealed to the heat-sealable resin layer 35 and the adhesive film 21 for metal terminal. It is preferable that the resin films 1 for electrical storage devices have a property of being heat-sealed to each other.

In the resin film 1 for electrical storage devices according to the present disclosure, the layer A having a water absorbent content of 5 mass% or more may be a single layer or a multiple layer, and is preferably a single layer. The layer B having a water absorbent content of less than 5 mass% may be a single layer or a multiple layer.

The resin film 1 for electrical storage devices according to the present disclosure includes two or more layers as shown in, for example, Figs. 1 and 2. Fig. 1 shows the resin film 1 for electrical storage devices which includes a laminate having a two-layered configuration in which a first layer 11 and a second layer 12 are laminated, and Fig. 2 shows a resin film 1 for electrical storage devices which includes a laminate having a three-layered configuration in which the second layer 12, the first layer 11 and a third layer 13 are laminated in the stated order. As described above, in Figs. 1 and 2, the first layer 11 is the layer A having a water absorbent content of 5 mass% or more, and the second layer 12 and the third layer 13 are the layer B having a water absorbent content of less than 5 mass%.

In the present disclosure, a layer containing a water absorbent is sometimes referred to as a "water absorbing layer". That is, in the present disclosure, the layer A (first layer 11) having a water absorbent content of 5 mass% or more is a water absorbing layer, and the layer B (second layer 12 and third layer 13) having a water absorbent content of less than 5 mass% is a water absorbing layer when it contains a water absorbent. Specific examples of the laminated configuration of the resin film 1 for electrical storage devices include a laminated configuration in which the first layer 11 is a water absorbing layer and the second layer 12 is a layer free of a water absorbent in, for example, Fig. 1. Also included is a laminated configuration in which the first layer 11 located in the middle is a water absorbing layer and the second layer 12 and the third layer 13 located on the surface are layers free of a water absorbent in, for example, Fig. 2.

In the present disclosure, the two or more layers of the resin film for electrical storage devices are only required to include at least one layer A having a water absorbent content of 5 mass% or more and at least one layer B having a water absorbent content of less than 5 mass%. From the viewpoint of more suitably exhibiting the effect of the present disclosure, the content of the water absorbent in the layer A is preferably about 10 mass% or more, more preferably about 15 mass% or more, and preferably about 50 mass% or less, more preferably about 40 mass% or less, still more preferably about 30 mass% or less, and is preferably in the range of about 5 to 50 mass%, about 5 to 40 mass%, about 5 to 30 mass%, about 10 to 50 mass%, about 10 to 40 mass%, about 10 to 30 mass%, about 15 to 50 mass%, about 15 to 40 mass%, about 15 to 30 mass%, or the like. If the content of the water absorbent in the layer A is more than 50 mass%, failure of film formation due to generation of foreign matter in the layer A, reduction of interlayer adhesion, and reduction of lamination strength or sealing strength may occur. On the other hand, of the content of the water absorbent is 5% or less, sufficient water absorbency cannot be exhibited.

From the viewpoint of more suitably exhibiting the effect of the present disclosure, the content of the water absorbent in the layer B having a water absorbent content of less than 5 mass% is preferably about 3 mass% or less, more preferably 0 mass%, and is preferably in the range of about 0 to 5 mass%, about 0 to 3 mass%, or the like.

From the viewpoint of more suitably exhibiting the effect of the present disclosure, the thickness of the layer A having a water absorbent content of 5 mass% or more is preferably about 3 µm or more, more preferably about 5 µm or more, still more preferably about 10 µm or more, and preferably about 200 µm or less, more preferably about 150 µm or less, still more preferably about 100 µm or less, and is preferably in the range of about 3 to 200 µm, about 3 to 150 µm, about 3 to 100 µm, about 5 to 200 µm, about 5 to 150 µm, about 5 to 100 µm, about 10 to 200 µm, about 10 to 150 µm, about 10 to 100 µm, or the like.

From the viewpoint of more suitably exhibiting the effect of the present disclosure (in particular, excellent insulation quality), the thickness of the layer B having a water absorbent content of less than 5 mass% or more is preferably about 3 µm or more, more preferably about 5 µm or more, still more preferably about 10 µm or more, and preferably about 100 µm or less, more preferably about 80 µm or less, still more preferably about 50 µm or less, and is preferably in the range of about 3 to 100 µm, about 3 to 80 µm, about 3 to 50 µm, about 5 to 100 µm, about 5 to 80 µm, about 5 to 50 µm, about 10 to 100 µm, about 10 to 80 µm, about 10 to 50 µm, or the like.

The total thickness of the resin film 1 for electrical storage devices is not particularly limited as long as the effect of the present disclosure is exhibited, and the total thickness of the resin film 1 for electrical storage devices is preferably about 10 µm or more, more preferably about 15 µm or more, still more preferably about 20 µm or more, and preferably about 1,000 µm or less, more preferably about 900 µm or less, still more preferably about 500 µm or less. The thickness is preferably in the range of about 10 to 1000 µm, about 10 to 900 µm, about 10 to 500 µm, about 15 to 1000 µm, about 15 to 900 µm, about 15 to 500 µm, about 20 to 1000 µm, about 20 to 900 µm, or about 20 to 500 µm.

When the resin film 1 for electrical storage devices according to the present disclosure is used as an adhesive film for metal terminal, the total thickness of the layer thereof is preferably about 30 µm or more, more preferably about 50 µm or more, still more preferably about 60 µm or more, and preferably about 1,000 µm or less, more preferably about 500 µm or less, still more preferably about 300 µm or less, and is preferably in the range of about 30 to 1,000 µm, about 30 to 500 µm, about 30 to 300 µm, about 50 to 1,000 µm, about 50 to 500 µm, about 50 to 300 µm, about 60 to 1,000 µm, about 60 to 500 µm, or about 60 to 300 µm.

From the viewpoint of more suitably exhibiting the effect of the present disclosure, the ratio of the thickness of the layer B having a water absorbent content of less than 5 mass% to the total thickness of the resin film 1 for electrical storage devices (thickness of layer B/total thickness) is preferably about 0.80 or less, more preferably about 0.75 or less, still more preferably about 0.50 or less, the lower limit of the ratio is, for example, about 0.01, about 0.05, or about 0.10, and the ratio is preferably in the range of about 0.01 to 0.80, about 0.01 to 0.75, about 0.01 to 0.50, about 0.05 to 0.80, about 0.05 to 0.75, about 0.05 to 0.50, about 0.10 to 0.80, about 0.10 to 0.75, or about 0.10 to 0.50.

It is preferable that at least one of the two or more layers of the resin film 1 for electrical storage devices preferably contains a heat-sealable resin. Further, it is preferable that one surface or both surfaces of the resin film 1 for electrical storage devices have a heat-sealing property. Further, for the 2) application in which the resin film for electrical storage devices is used as a heat-sealable resin layer of the exterior material for electrical storage devices, it is necessary that at least one surface of the resin film 1 for electrical storage devices have heat-sealability. It is particularly preferable that all the layers of the resin film 1 for electrical storage devices contain a heat-sealable resin.

For the 1) application in which resin film for electrical storage devices is disposed between the exterior material for electrical storage devices and the electrical storage device element, it is preferable to enhance the heat-sealability of the resin film 1 for electrical storage devices when the resin film 1 for electrical storage devices is located at the flange portion of the exterior material 3 (the peripheral edge portion 3a of the exterior material 3). For example, when the resin film 1 for electrical storage devices includes three or more layers, it is preferable that the layer located on the surface (In Fig. 2, the second layer 12 and the third layer 13) contains a heat-sealable resin. From the viewpoint of suppressing deterioration of the heat-sealing property of the layer located at the surface, the layer located at the surface is preferably free of a water absorbent (in particular, an inorganic water absorbent). In the electrical storage device, it is preferable that the water absorbing layer is provided between layers located at the surface from the viewpoint of further suitably exhibiting the water absorbing performance of the water absorbing layer of the resin film 1 for electrical storage devices. This is because if the water absorbing layer is located at the surface, moisture in the atmosphere is absorbed before the electrical storage device is manufactured, so that the water absorption performance of the water absorbing layer is likely to be deteriorated. In the electrical storage device, it is also preferable that for the water absorbing layer, the third layer 13 located on the exterior material 3 side is a water absorbing layer. This is because the third layer 13 is close to the exterior material 3, so that moisture entering from the exterior material 3 side is easily adsorbed. In the electrical storage device, it is also preferable that for the water absorbing layer, the second layer 12 located on the electrical storage device element 4 side is a water absorbing layer. This is because the second layer 12 is close to the electrical storage device elements 4, so that moisture contained in the electrical storage device element 4 is easily adsorbed.

The resin contained in the resin film 1 for electrical storage devices is not particularly limited as long as the effect of the present disclosure is not impaired, and for example, a thermoplastic resin is preferable, and a heat-sealable resin is more preferable. Specific examples of the resin include resins such as polyolefin, polyester, polyamide, epoxy resin, acrylic resin, fluororesin, polyurethane, silicone resin and phenol resin, and modified products of these resins. The resin for forming the resin film 1 for electrical storage devices may be a copolymer of these resins or a modified product of the copolymer. Further, a mixture of these resins may be used. Among them, heat-sealable resins such as polyolefin and polyester are preferable.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. The polyolefin resin in the case of a copolymer may be a block copolymer or a random copolymer. These polyolefin-based resins may be used alone, or may be used in combination of two or more thereof. Among them, polypropylene is particularly preferable because it is excellent in heat-sealing property. The polypropylene may be either random polypropylene or homopolypropylene. The polypropylene is preferably random polypropylene from the viewpoint of water absorption rate and film formability.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof. Among them, polybutylene terephthalate is particularly preferable from the viewpoint of enhancing heat resistance and pressure resistance (for example, deterioration of insulation quality (due to collapse caused by heat-sealing) in sealing of the electrical storage device element 4 with the exterior material 3).

The resin contained in the resin film 1 for electrical storage devices may contain an elastomer. The elastomer serves to enhance the flexibility of the resin film 1 for electrical storage devices while securing the durability of the resin film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers. In the resin film 1 for electrical storage devices, the content of the elastomer is not particularly limited as long as the flexibility of the resin film 1 for electrical storage devices can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The content of the resin contained in the resin film 1 for electrical storage devices is, for example, 40.0 mass% or more, 45.0 mass% or more, 50.0 mass% or more, 55.0 mass% or more, 60.0 mass% or more, 65.0 mass% or more, 70.0 mass% or more, 75.0 mass% or more, 80.0 mass% or more, 85.0 mass% or more, 90.0 mass% or more, 95.0 mass% or more, 99.0 mass% or more, 99.5 mass% or more, or 99.9 mass% or more.

From the viewpoint of more suitably exerting the effect of the present disclosure, the content of the absorbent contained in the resin film for electrical storage devices is preferably 3 mass% or more, more preferably 6 mass% or more, still more preferably 9 mass% or more, and preferably 30 mass% or less, more preferably 25 mass% or less, still more preferably 20 mass% or less, and is preferably in the range of about 3 to 30 mass%, about 3 to 25 mass%, about 3 to 20 mass%, about 6 to 30 mass%, about 6 to 25 mass%, about 6 to 20 mass%, about 9 to 30 mass%, about 9 to 25 mass%, or about 9 to 20 mass%.

The water absorbent contained in the resin film 1 for electrical storage devices is not particularly limited as long as it exhibits a water absorbing property in a state of being dispersed in the resin film. For example, from the viewpoint of temporal stability in the electrical storage device, an inorganic water absorbent can be suitably used. The inorganic water absorbent is preferably, for example, an alkali metal compound or an alkaline earth metal compound. Specific examples of the preferred inorganic water absorbent include calcium oxide, anhydrous magnesium sulfate, magnesium oxide, calcium chloride, zeolite, aluminum oxide, silica gel, alumina gel, and dried alum. Among inorganic water absorbents, in general, inorganic chemical water absorbents have a higher water absorption effect than inorganic physical water absorbents, can reduce the content, and allow a sufficient water-absorbing property and a heat-sealing property to be easily achieved in a single layer. Among the inorganic chemical water absorbents, calcium oxide, anhydrous magnesium sulfate, and magnesium oxide are particularly preferable because they hardly re-release moisture, have high temporal stability in a low-humidity state in the packaging, and have a bone-dry effect. The bone-dry effect means an effect of absorbing water to a relative humidity of about 0%, and the humidity control effect means an effect of maintaining a constant humidity by absorbing water at a high humidity and releasing moisture at a low humidity. The water absorbent which is used in a high-temperature environment, such as that for all-solid-batteries, is preferably an inorganic chemical absorbent which re-releases moisture in a high-temperature range.

In the resin film 1 for electrical storage devices, it is preferable that the water absorbent is incorporated into the water absorbing layer by way of, for example, a masterbatch obtained by blending the water absorbent and the resin. Specifically, the water absorbent is melt-blended with the resin at a relatively high concentration to prepare a masterbatch. The obtained masterbatch can be further mixed with a resin and molded into a film shape to form a water absorbing layer. The content of the water absorbent in the masterbatch is preferably about 20 to 90 mass%, more preferably about 30 to 70 mass%. As long as the content is in the above-described range, it is easy to incorporate a necessary and sufficient amount of the water absorbent in the water absorbing layer in a dispersed state.

The resin film 1 for electrical storage devices may contain any of various plastic blending agents, additives and the like for the purpose of improving and modifying, for example, processability, heat resistance, weather resistance, mechanical properties, dimensional stability, antioxidant properties, slipperiness, releasability, flame retardancy, antifungal properties, electrical properties and strength. The content thereof may be arbitrarily set to an extremely small amount up to several tens percents depending on the relevant purpose. Examples of the general additives that can be contained for the above-described purposes include an anti-blocking agent, a slipping agent, a crosslinking agent, an antioxidant, an ultraviolet absorbent, a light stabilizer, a filler, a reinforcing agent, an antistatic agent, a pigment, and a resin for modification.

From the viewpoint of more suitably exhibiting the effect of the present disclosure (in particular, excellent insulation quality), the content of the solid particles in the layer A, of the two or more layers in the resin film 1 for electrical storage devices according to the present disclosure, is preferably about 10 mass% or more, more preferably about 15 mass% or more, and preferably about 50 mass% or less, more preferably about 40 mass% or less, still more preferably about 30 mass% or less, and is preferably in the range of about 5 to 50 mass%, about 5 to 40 mass%, about 5 to 30 mass%, about 10 to 50 mass%, about 10 to 40 mass%, about 10 to 30 mass%, about 15 to 50 mass%, about 15 to 40 mass%, or about 15 to 30 mass%. In the layer B having a water absorbent content of less than 5%, the content of solid particles is preferably less than about 5 mass%, more preferably less than about 3 mass%, still more preferably 0 mass%, and is preferably in the range of about 0 to 5 mass%, about 0 to 3 mass%, or the like. The solid particles include some of the water absorbents exemplified above, pigments (for example, carbon black-based pigments, titanium oxide-based pigments, cadmium-based pigments, lead-based pigments, chromium oxide-based pigments, and iron-based pigments), and fillers (silica and the like).

**In** the resin film for electrical storage devices according to the present disclosure, the dielectric breakdown strength of the resin film for electrical storage devices after absorption of water is preferably 40 kV/mm or more, more preferably about 50 to 200 kV/mm, still more preferably about 50 to 150 kV/mm as measured by the following measurement method.

### (Measurement of dielectric breakdown strength after absorption of water)

A 10 cm-square resin film for electrical storage devices is provided, and immersed in hot water at 80°C. The immersion is continued until the water absorbent in the resin film for electrical storage devices absorbs water to full capacity, thereby obtaining a resin film for electrical storage devices after absorption of water. When there is not a change in weight of the resin film by immersion, the water absorbent is determined as having absorbed water to full capacity. The water-absorbing capacity of the resin film for electrical storage devices is calculated from the weight of the film before and after immersion. Next, in accordance with the provisions of JIS C 2110-1: 2016, the dielectric breakdown strength of the resin film for electrical storage devices after absorption of water is measured under the measurement conditions of measurement environment: 23°C in the air, pressure boosting method: short-time method (alternating-current, 50 Hz), pressure boosting rate: 0.3 kV/s, and electrode: 25 mmφ cylinder/75 mmφ cylinder. The measured value is an average value for five samples.

### (Method for manufacturing resin film for electrical storage devices)

The method for manufacturing the resin film 1 for electrical storage devices is not particularly limited as long as the resin film 1 for electrical storage devices is obtained, and a known or conventional film formation method and lamination method may be applied. The resin film 1 for electrical storage devices can be manufactured by, for example, a known film formation method and/or lamination method such as an extrusion method, a coextrusion method, a cast molding method, a T-die method, a cutting method or an inflation method. For example, films for forming the layers, which are produced in advance, may be laminated with an adhesive agent layer interposed therebetween, a molten resin composition may be laminated by extrusion or co-extrusion on a layer formed in advance, a plurality of layers may be laminated by melting and press-bonding while being produced in parallel, or one or more resins may be applied onto another layer, and dried to perform coating.

A layer forming the resin film 1 for electrical storage devices can be laminated by extrusion or co-extrusion in an extrusion coating method, or laminated with an adhesive layer by an inflation method or a casting method after film formation. Even in the case of an extrusion coating method, the layer may be laminated with an adhesive layer if necessary. Alternatively, a film formed in advance may be laminated and bonded with an adhesive layer laminated by an extrusion coating method, a dry lamination method, a non-solvent lamination method or the like. Subsequently, aging treatment may be performed if necessary.

For example, when the layers are laminated by an extrusion coating method, first, a resin composition for forming the layer is heated and melted, expanded and stretched in a necessary width direction by a T-die, and extruded or co-extruded into a curtain shape, and the molten resin is caused to flow down to a lamination surface, and sandwiched between a rubber roll and a cooled metal roll. In this way, the layer can be formed and laminated and bonded to the lamination surface in parallel. The melt flow rate (MFR) of the resin component contained in each layer in the case of lamination performed by an extrusion coating method is preferably 0.2 to 50 g/10 min, more preferably 0.5 to 30 g/10 min. If MFR is below or above the above-described range, processability is likely to be compromised. In the present specification, MFR is a value measured by a method conforming to JIS K 7210.

The melt flow rate (MFR) of the resin component contained in each layer in the case of use of an inflation method is preferably 0.2 to 10 g/10 min, more preferably 0.2 to 9.5 g/10 min. If MFR is below or above the above-described range, processability is likely to be compromised.

Desired surface treatment can be applied to the surface of each layer between the layers forming the resin film for electrical storage devices in advance if necessary for improving bondability. For example, a corona treatment layer, an ozone treatment layer, a plasma treatment layer, an oxidation treatment layer, and the like can be formed and provided by performing any of pretreatments such as corona discharge treatment, ozone treatment, low-temperature plasma treatment using oxygen gas, nitrogen gas or the like, glow discharge treatment, and oxidation treatment using a chemical or the like. Alternatively, any of various coating agent layers such as a primer coating agent layer, an undercoat agent layer, an anchor coating agent layer, an adhesive agent layer and a vapor deposition anchor coating agent layer may be formed on the surface as a surface treatment layer. For the various coating agent layers described above, for example, a resin composition containing a polyester-based resin, a polyamide-based resin, a polyurethane-based resin, an epoxy-based resin, a phenol-based resin, a (meth)acryl-based resin, a polyvinyl acetate-based resin, a polyolefin-based resin such as polyethylene or polypropylene or a copolymer or a modified resin thereof, a cellulose-based resin or the like as a vehicle main component can be used.

Each layer forming the resin film for electrical storage devices can be further uniaxially stretched or biaxially stretched by a heretofore known method using a tenter method, a tubular method or the like if necessary.

### 2. Electrical storage device

As described above, the electrical storage device 10 of the present disclosure has a structure in which the electrical storage device element 4 is sealed with the exterior material 3. The electrical storage device 10 is sealed by covering the electrical storage device element 4 with the exterior material 3 in such a manner as to allow formation of a flange portion of the exterior material 3 (a peripheral edge portion 3a of the exterior material 3) on the peripheral edge of the electrical storage device element 4, and heat-sealing the flange portion of the exterior material 3 to perform tight sealing.

For the 1) application in which the resin film for electrical storage devices is disposed between the exterior material for electrical storage devices and the electrical storage device element, in the electrical storage device 10 of the present disclosure, the resin film 1 for electrical storage devices may be located on the whole of a surface of the exterior material 3 on the electrical storage device element 4 side (heat-sealable resin layer 35 side), or may be located on a part of the surface on the electrical storage device element 4 side (heat-sealable resin layer 35 side). From the viewpoint of suitably exhibiting the effect of the present disclosure, it is preferable that the resin film 1 for electrical storage devices is disposed between the exterior material 3 of the electrical storage device 10 and the electrical storage device element 4 in such a manner as to be located on the whole of a surface of the exterior material 3 on the electrical storage device element 4 side (heat-sealable resin layer 35 side) (see Figs. 5 to 9). For example, the resin film 1 for electrical storage devices may be disposed only between the exterior material 3 for electrical storage devices and the electrical storage device element 4 as shown in Fig. 5, or may be disposed between the exterior material peripheral edge portion 3a (heat-sealed portion) of the exterior material 3 and the electrical storage device element 4 as shown in Fig. 6, or the electrical storage device element 4 may be covered with the resin film 1 for electrical storage devices as shown in Fig. 7, and a part of a surface of the metal terminal 2 may be further covered with the resin film 1 for electrical storage devices as shown in Fig. 8. Further, as shown in Fig. 9, it is also possible to dispose the resin film 1 for electrical storage devices according to the present disclosure between the exterior material 3 of the electrical storage device 10 and the electrical storage device element 4 such that the electrical storage device element 4 is sealed by the resin film 1 for electrical storage devices. The resin film 1 for electrical storage devices may be present between the exterior material 3 and the metal terminal 2 in a state of being hear-sealed.

For the 2) application in which the resin film 1 for electrical storage devices is used as a heat-sealable resin layer of an exterior material for electrical storage devices, in the electrical storage device 10 of the present disclosure, the resin film 1 for electrical storage devices according to the present disclosure is used as a heat-sealable resin layer 35 of the exterior material 3 for electrical storage devices which includes a laminate including at least a base material layer 31, a barrier layer 33, and the heat-sealable resin layer 35 in the stated order as shown in Fig. 3.

For the 4) application in which the resin film 1 for electrical storage devices is used as an adhesive film for metal terminal which is interposed between a metal terminal electrically connected to an electrode of an electrical storage device element and an exterior material for electrical storage devices which seals the electrical storage device element, in the electrical storage device 10 of the present disclosure, the resin film 1 for electrical storage devices is used as an adhesive film 21 for metal terminal as shown in Fig. 4.

### [Exterior material 3]

The exterior material 3 may be a metal can, or a laminated film including a barrier layer. Examples of the exterior material 3 including a laminated film include materials having a laminated structure including a laminate having at least the base material layer 31, the barrier layer 33 and the heat-sealable resin layer 35 in this order. Fig. 3 shows an aspect in which the base material layer 31, an adhesive agent layer 32 provided if necessary, the barrier layer 33, an adhesive layer 34 provided if necessary, and the heat-sealable resin layer 35 are laminated in the stated order as an example of a cross-sectional structure of the exterior material 3. In the exterior material 3, the base material layer 31 is on the outer layer side, and the heat-sealable resin layer 35 is an innermost layer. During construction of an electrical storage device, the heat-sealable resin layers 35 located on the peripheral edge of the electrical storage device element 4 is brought into contact with each other, and heat-sealed to seal the electrical storage device element 4, so that the electrical storage device element 4 is sealed. Figs. 4 to 9 show the electrical storage device 10 where the embossed-type exterior material 3, which is molded by embossing molding, is used, but the exterior material 3 may be of non-molded pouch type. Examples of the pouch type include three-way seal, four-way seal and pillow type, and any of the types may be used.

The thickness of the laminate forming the exterior material 3 is not particularly limited, and is, for example, about 190 µm or less, preferably about 180 µm or less, about 160 µm or less, about 155 µm or less, about 140 µm or less, about 130 µm or less, or about 120 µm or less from the viewpoint of cost reduction, improvement of the energy density and the like, and preferably about 35 µm or more, about 45 µm or more, about 60 µm or more, or about 80 µm or more from the viewpoint of maintaining the function of the exterior material 3, which is protection of the electrical storage device element 4. For example, the thickness is preferably in the range of about 35 to 190 µm, about 35 to 180 µm, about 35 to 160 µm, about 35 to 155 µm, about 35 to 140 µm, about 35 to 130 µm, about 35 to 120 µm, about 45 to 190 µm, about 45 to 180 µm, about 45 to 160 µm, about 45 to 155 µm, about 45 to 140 µm, about 45 to 130 µm or more, about 45 to 120 µm, about 60 to 190 µm, about 60 to 180 µm, about 60 to 160 µm, about 60 to 155 µm, about 60 to 140 µm, about 60 to 130 µm, about 60 to 120 µm, about 80 to 190 µm, about 80 to 180 µm, about 80 to 160 µm, about 80 to 155 µm, about 80 to 140 µm, about 80 to 130 µm or about 80 to 120 µm.

The resin film 1 for electrical storage devices according to the present disclosure can be suitably applied to an exterior material for all-solid-state batteries, and the thickness of the laminate forming the exterior material for all-solid-state batteries is not particularly limited, and is preferably about 10,000 µm or less, about 8,000 µm or less, or about 5,000 µm or less from the viewpoint of cost reduction, improvement of the energy density and the like, and preferably about 100 µm or more, about 150 µm or more, or about 200 µm or more from the viewpoint of maintaining the function of the exterior material for all-solid-state batteries, i.e., a function of protecting a battery element. The thickness of the laminate is preferably, in the range of, for example, about 100 to 10,000 µm, about 100 to 8,000 µm, about 100 to 5,000 µm, about 150 to 10,000 µm, about 150 to 8,000 µm, about 150 to 5,000 µm, about 200 to 10,000 µm, about 200 to 8,000 µm, or about 200 to 5,000 µm, and particularly preferably about 200 to 5,000 µm.

### (Base material layer 31)

In the exterior material 3, the base material layer 31 is a layer that functions as a base material of the exterior material, and forms the outermost layer side of the exterior material.

The material that forms the base material layer 31 is not particularly limited as long as it has an insulation quality. Examples of the material that forms the base material layer 31 include polyester, polyamide, epoxy, acrylic, fluororesins, polyurethane, silicone resins, phenol, polyetherimide, polyimide and mixtures and copolymers thereof. Polyester such as polyethylene terephthalate or polybutylene terephthalate has the advantage that it is excellent in electrolytic solution resistance, so that whitening etc. due to deposition of an electrolytic solution is hardly occurs, and thus the polyester is suitably used as a material for formation of the base material layer 31. **In** addition, a polyamide film is excellent in stretchability, can prevent occurrence of whitening due to resin breakage in the base material layer 31 during molding, and is thus suitably used as a material for formation of the base material layer 31.

The base material layer 31 may be formed of a uniaxially or biaxially stretched resin film, or may be formed of an unstretched resin film. Among them, a uniaxially or biaxially stretched resin film, particularly a biaxially stretched resin film has improved heat resistance through orientation and crystallization, and is therefore suitably used as the base material layer 31.

Among them, nylons and polyesters are preferable and biaxially stretched nylons and biaxially stretched polyesters are more preferable as resin films for formation of the base material layer 31. Since the all-solid-state battery has tolerance to a temperature of 150°C or higher, sealing is often performed at a high temperature of 200°C or higher, and biaxially stretched polyester is most suitable.

The base material layer 31 can also be laminated with a resin film which is made of a different material for improving pinhole resistance, and insulation quality as a packaging of an electrical storage device. Specific examples include a multi-layered structure in which a polyester film and a nylon film are laminated, and a multi-layered structure in which a biaxially stretched polyester and a biaxially stretched nylon are laminated. When the base material layer 31 is made to have a multi-layered structure, the resin films may be bonded with the use of an adhesive, or may be directly laminated without the use of an adhesive. Examples of the method for bonding the resin films without the use of an adhesive include methods in which the resin films are bonded in a heat-melted state, such as a co-extrusion method, a sand lamination method and a thermal lamination method. For sealing at a high temperature, it is desirable that at least the outermost layer be a biaxially stretched polyester.

In addition, the friction of the base material layer 31 may be reduced for improving moldability. When the friction of the base material layer 31 is reduced, the friction coefficient of the surface thereof is not particularly limited, and it is, for example, 1.0 or less. Examples of the method for reducing the friction of the base material layer 31 include matting treatment, formation of a thin film layer of a slipping agent, and a combination thereof.

The thickness of the base material layer 31 is, for example, about 3 µm or more, about 4 µm or more, about 5 µm or more, about 10 µm or more, or about 15 µm or more, and about 100 µm or less, about 75 µm or less, about 50 µm or less, or about 30 µm or less, and is preferably in the range of about 3 to 100 µm, about 3 to 75 µm, about 3 to 50 µm, about 3 to 30 µm, about 4 to 100 µm, about 4 to 75 µm, about 4 to 50 µm, about 3 to 30 µm, about 5 to 100 µm, about 5 to 75 µm, about 5 to 50 µm, about 5 to 30 µm, about 10 to 100 µm, about 10 to 75 µm, about 10 to 50 µm, about 10 to 30 µm, about 15 to 100 µm, about 15 to 75 µm, about 15 to 50 µm, or about 15 to 30 µm.

### (Adhesive agent layer 32)

**In** the exterior material 3, the adhesive agent layer 32 is a layer disposed on the base material layer 31 if necessary for imparting adhesion to the base material layer 31. That is, the adhesive agent layer 32 is provided between the base material layer 31 and the barrier layer 33.

The adhesive agent layer 32 is formed from an adhesive capable of bonding the base material layer 31 and the barrier layer 33. The adhesive used for forming the adhesive agent layer 32 may be a two-liquid curable adhesive, or may be a one-liquid curable adhesive. **In** addition, the adhesion mechanism of the adhesive used for forming the adhesive agent layer 32 is not particularly limited, and may be any one of a chemical reaction type, a solvent volatilization type, a heat melting type, a heat pressing type and so on.

As resin components of adhesives that can be used for formation of the adhesive agent layer 32, polyurethane-based two-liquid curable adhesive agents; and polyamides, polyesters or blend resins of these resins and modified polyolefins are preferable because they are excellent in spreadability, durability and a yellowing inhibition action under high-humidity conditions, a thermal degradation inhibition action during heat-sealing, and so on, and effectively suppress occurrence of delamination by inhibiting a reduction in lamination strength between the base material layer 31 and the barrier layer 33.

The adhesive agent layer 32 may be made multilayered with different adhesive components. When the adhesive agent layer 32 is made multilayered with different components, it is preferable that a resin excellent in bondability to the base material layer 31 is selected as an adhesive component to be disposed on the base material layer 31 side, and an adhesive component excellent in bondability to the barrier layer 33 is selected as an adhesive component to be disposed on the barrier layer 33 side, from the viewpoint of improving lamination strength between the base material layer 31 and the barrier layer 33. When the adhesive agent layer 32 is made multilayered with different adhesive components, specific examples of the preferred adhesive component to be disposed on the barrier layer 33 side include acid-modified polyolefins, metal-modified polyolefins, mixed resins of polyesters and acid-modified polyolefins, resins containing a copolymerization polyester, alicyclic isocyanate compounds.

The thickness of the adhesive agent layer 32 is, for example, about 2 to 50 µm, preferably about 3 to 25 µm.

### (Barrier layer 33)

In the exterior material, the barrier layer 33 is a layer which is intended to improve the strength of the exterior material and which has a function of preventing ingress of water vapor, oxygen, light and the like into the electrical storage device element. The barrier layer 33 is preferably a metal layer, i.e., a layer formed of a metal. Specific examples of the metal forming the barrier layer 33 include aluminum, stainless and titanium, with aluminum being preferred. The barrier layer 33 can be formed from, for example, a metal foil, a metal vapor-deposited film, an inorganic oxide vapor-deposited film, a carbon-containing inorganic oxide vapor-deposited film, a film provided with any of these vapor-deposited films, or the like, and is formed preferably from a metal foil, more preferably from an aluminum foil. From the viewpoint of preventing generation of wrinkles and pinholes in the barrier layer 33 during manufacturing of the exterior material, it is more preferred to form the barrier layer from a soft aluminum foil such as annealed aluminum (JIS H4160: 1994 A8021H-O, JIS H4160: 1994 A8079H-O, JIS H4000: 2014 A8021P-O, JIS H4000: 2014 A8079P-O).

From the viewpoint of making pinholes unlikely to be generated by molding while thinning the exterior material, the thickness of the barrier layer 33 is preferably about 10 to 200 µm, more preferably about 20 to 100 µm. From the viewpoint of imparting high moldability or high rigidity to the exterior material 3 for electrical storage devices, the thickness of the barrier layer 33 is preferably about 45 µm or more, more preferably about 50 µm or more, and preferably more preferably 85 µm or less, more preferably 75 µm or less, and is preferably in the range of about 45 to 85 µm, about 45 to 75 µm, about 50 to 85 µm, or about 50 to 75 µm.

In addition, at least one surface, preferably both surfaces, of the barrier layer 33 are subjected to a chemical conversion treatment for stabilization of bonding, prevention of dissolution and corrosion, and so on. Here, the chemical conversion treatment is a treatment for forming a corrosion-resistant film on the surface of the barrier layer.

### (Adhesive layer 34)

In the exterior material 3, the adhesive layer 34 is a layer provided between the barrier layer 33 and the heat-sealable resin layer 35 if necessary for firmly bonding the heat-sealable resin layer 35.

The adhesive layer 34 is formed from an adhesive capable of bonding the barrier layer 33 and the heat-sealable resin layer 35 to each other. The composition of the adhesive used for forming the adhesive layer is not particularly limited, and examples thereof include adhesives formed of a polyester polyol compound and an alicyclic isocyanate compound.

The thickness of the adhesive layer 34 is, for example, about 1 to 40 µm, preferably about 2 to 30 µm.

### (Heat-sealable resin layer 35)

In the exterior material 3, the heat-sealable resin layer 35 is a layer which corresponds to an innermost layer and performs a function of hermetically sealing the electrical storage device element by heat-sealing the heat-sealable resin layers to each other during construction of the electrical storage device.

The resin component to be used in the heat-sealable resin layer 35 is not particularly limited as long as it can be heat-sealed, and for the exterior material, examples thereof generally include polyolefins and cyclic polyolefins. For the 2) application in which the resin film 1 for electrical storage devices according to the present disclosure is used as a heat-sealable resin layer of an exterior material for electrical storage devices, the resin film 1 for electrical storage devices according to the present disclosure is used as a heat-sealable resin layer 35 of the exterior material 3 for electrical storage devices which includes a laminate including at least a base material layer 31, a barrier layer 33, and the heat-sealable resin layer 35 in the stated order as shown in Fig. 3.

Specific examples of the polyolefin include polyethylene such as low-density polyethylene, medium-density polyethylene, high-density polyethylene and linear low-density polyethylene; crystalline or noncrystalline polypropylene such as homopolypropylene, block copolymers of polypropylene (e.g., block copolymers of propylene and ethylene) and random copolymers of polypropylene (e.g., random copolymers of propylene and ethylene); terpolymers of ethylene-butene-propylene; and the like. Among these polyolefins, polyethylene and polypropylene are preferred.

The cyclic polyolefin is a copolymer of an olefin and a cyclic monomer, and examples of the olefin as a constituent monomer of the cyclic polyolefin include ethylene, propylene, 4-methyl-1-pentene, butadiene and isoprene. Examples of the cyclic monomer as a constituent monomer of the cyclic polyolefin include cyclic alkenes such as norbornene, specifically cyclic dienes such as cyclopentadiene, dicyclopentadiene, cyclohexadiene and norbornadiene. Among these polyolefins, cyclic alkenes are preferable, and norbornene is further preferable. Examples of the constituent monomer include styrene.

Among these resin components, crystalline or noncrystalline polyolefins, cyclic polyolefins and blend polymers thereof are preferable, and polyethylene, polypropylene, copolymers of ethylene and norbornene, and blend polymers of two or more thereof are more preferable.

The heat-sealable resin layer 35 may be formed from one resin component alone, or may be formed from a blend polymer obtained by combining two or more resin components. Further, the heat-sealable resin layer 35 may have only one layer, but may have two or more layers formed of the same resin component or different resin components.

The thickness of the heat-sealable resin layer 35 is not particularly limited, and is, for example, about 2 to 2000 µm, preferably about 5 to 1000 µm, still more preferably about 10 to 500 µm.

The resin film 1 for electrical storage devices according to the present disclosure can be suitably applied to an exterior material for all-solid-state batteries, and the melting point of the heat-sealable resin layer 35 of the exterior material for all-solid-state batteries is preferably 150 to 250°C, more preferably 180 to 270°C, still more preferably 200 to 270°C, still more preferably 200 to 250°C.

Examples of the resin contained in the heat-sealable resin layer 35 of the exterior material for an all-solid-state battery include polyolefins such as polypropylene and polyethylene, acid-modified polyolefins such as acid-modified polypropylene and acid-modified polyethylene, and polybutylene terephthalate. Among them, polybutylene terephthalate is excellent in heat resistance, and therefore it is preferable that in the exterior material for all-solid-state batteries, the heat-sealable resin layer 35 is formed of a polybutylene terephthalate film. When the heat-sealable resin layer 35 is formed from a polybutylene terephthalate film, the heat-sealable resin layer 35 is also excellent in adhesion to the resin film 1 for electrical storage devices according to the present disclosure. The polybutylene terephthalate film that forms the heat-sealable resin layer 35 may be formed into the heat-sealable resin layer 35 by laminating a polybutylene terephthalate film provided in advance with the adhesive layer 34, or may be formed into a film by melt-extruding a resin for forming the polybutylene terephthalate film and laminated with the adhesive layer 34, or a resin for forming the heat-sealable resin layer 35 and a resin for forming the adhesive layer 34 may be co-extruded to perform lamination.

The polybutylene terephthalate film may be a stretched polybutylene terephthalate film or an unstretched polybutylene terephthalate film, and is preferably an unstretched polybutylene terephthalate film.

It is preferable that the polybutylene terephthalate film contains an elastomer in addition to polybutylene terephthalate. The elastomer is one that serves to enhance the flexibility of the polybutylene terephthalate film while securing the durability of the polybutylene terephthalate film in a high-temperature environment. The elastomer is preferably at least one thermoplastic elastomer selected from polyester-based elastomers, polyamide-based elastomers, polyurethane-based elastomers, polyolefin-based elastomers, polystyrene-based elastomers, and polyether-based elastomers, or a thermoplastic elastomer which is a copolymer of any of the foregoing elastomers. **In** the polybutylene terephthalate film, the content of the elastomer is not particularly limited as long as the flexibility of the polybutylene terephthalate film can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

The heat-sealable resin layer 35 may be composed of only one layer, or may be composed of two or more layers with the same resin component or different resin components. When the heat-sealable resin layer 35 is composed of two or more layers, at least one layer is preferably formed from a polybutylene terephthalate film, and the polybutylene terephthalate film is preferably an innermost layer of the exterior material for an all-solid-state battery. The layer bonded to the adhesive layer 34 is preferably a polybutylene terephthalate film. When the heat-sealable resin layer 35 is formed from two or more layers, the layer which is not formed from a polybutylene terephthalate film may be, for example, a layer formed from a polyolefin such as polypropylene or polyethylene, an acid-modified polyolefin such as acid-modified polypropylene or acid-modified polyethylene, or the like. However, since polyolefins and acid-modified polyolefins have lower durability in a high-temperature environment as compared to polybutylene terephthalate, it is preferable that the heat-sealable resin layer 35 includes only a polybutylene terephthalate film.

The electrical storage device of the present disclosure is an electrical storage device such as a battery (including a condenser, a capacitor and the like). The electrical storage device of the present disclosure may be either a primary battery or a secondary battery, and is preferably used for a secondary battery. The type of the secondary battery is not particularly limited, and examples thereof include lithium ion batteries, lithium ion polymer batteries, all-solid-state batteries, lead storage batteries, nickel-hydrogen storage batteries, nickel-cadmium storage batteries, nickel-iron storage batteries, nickel-zinc storage batteries, silver oxide-zinc storage batteries, metal-air batteries, polyvalent cation batteries, condensers and capacitors. Among these secondary batteries, lithium ion batteries, lithium ion polymer batteries and all-solid-state batteries are used as the electrical storage device of the present disclosure, and the electrical storage device is particularly suitably used for all-solid-state batteries. Examples

Hereinafter, the present disclosure will be described in detail by way of examples and comparative examples. However, the present disclosure is not limited to examples.

### <Manufacturing of resin film for electrical storage devices>

### (Example 1)

A random polypropylene film (water absorbent content: 0 mass%, thickness: 10 µm) was laminated to each of both surfaces of a random polypropylene film containing 20 mass% of calcium oxide (CaO) as a water absorbent (thickness: 30 µm), thereby manufacturing a resin film for electrical storage devices which has a three-layered configuration of r-PP (water absorbent content: 0 mass%, 10 µm)/r-PP (water absorbent content: 20 mass%, 30 µm)/r-PP (water absorbent content: 0 mass%, 10 µm).

### (Example 2)

A random polypropylene film (water absorbent content: 0 mass%, thickness: 20 µm) was laminated to one surface of a random polypropylene film containing 20 mass% of CaO as a water absorbent (thickness: 30 µm), thereby manufacturing a resin film for electrical storage devices which has a two-layered configuration of r-PP (water absorbent content: 0 mass%, 20 µm)/r-PP (water absorbent content: 20 mass%, 30 µm). The resin film for electrical storage devices in Example 2 is used with r-PP (water absorbent content: 0 mass%, 20 µm) disposed on the exterior material side and r-PP (water absorbent content: 20 mass%, 30 µm) disposed on the electrical storage device element side.

### (Example 3)

A procedure similar to that in Example 2 was carried out. A random polypropylene film (water absorbent content: 0 mass%, thickness: 20 µm) was laminated to one surface of a random polypropylene film containing 20 mass% of CaO as a water absorbent (thickness: 30 µm), thereby manufacturing a resin film for electrical storage devices which has a two-layered configuration of r-PP (water absorbent content: 20 mass%, 30 µm)/r-PP (water absorbent content: 0 mass%, 20 µm). The resin film for electrical storage devices in Example 3 is used with r-PP (water absorbent content: 0 mass%, thickness: 20 µm) disposed on the electrical storage device element side and r-PP (water absorbent content: 20 mass%, 30 µm) disposed on the exterior material side.

### (Example 4)

A random polypropylene film containing 20 mass% of CaO as a water absorbent (thickness: 15 µm) was laminated to each of both surfaces of a random polypropylene film (water absorbent content: 0 mass%, thickness: 20 µm) to manufacture a resin film for electrical storage devices which has a three-layered configuration of r-PP (water absorbent content: 20 mass%, 15 µm)/r-PP (water absorbent content: 0 mass%, 20 µm)/r-PP (water absorbent content: 20 mass%, 15 µm).

### (Example 5)

A random polypropylene film (water absorbent content: 0 mass%, thickness: 10 µm) was laminated to each of both surfaces of a random polypropylene film containing 20 mass% of CaO as a water absorbent and 5 mass% of titanium oxide as solid particles (thickness: 30 µm), thereby manufacturing a resin film for electrical storage devices which has a three-layered configuration of r-PP (water absorbent content: 0 mass%, 10 µm)/r-PP (water absorbent content: 20 mass%, 30 µm)/r-PP (water absorbent content: 0 mass%, 10 µm).

### (Example 6)

A polybutylene terephthalate film (water absorbent content: 0 mass%, thickness 10 µm) was laminated to each of both surfaces of a polybutylene terephthalate film containing 20 mass% of CaO as a water absorbent (thickness: 30 µm), thereby manufacturing a resin film for electrical storage devices which has a three-layered configuration of PBT (water absorbent content: 0 mass%, 10 µm)/PBT (water absorbent content: 20 mass%, 30 µm)/PBT (water absorbent content: 0 mass%, 10 µm).

### (Example 7)

A resin film for electrical storage devices was manufactured in the same manner as in Example 2, and used as a heat-sealable resin layer of an exterior material for electrical storage devices. As the base material layer of the exterior material for electrical storage devices, a polyethylene terephthalate film (thickness: 25 µm or 12 µm) in which a surface to be bonded had been corona-treated, and a nylon film (thickness: 25 µm) were provided. In addition, an aluminum alloy foil (JIS H4160: 1994 A8021 H-O (thickness: 40 µm)) was provided as a barrier layer. As the heat-sealable resin layer, the resin film for electrical storage devices was used. Next, a laminate was produced in which a polyethylene terephthalate film and a nylon film were bonded and the nylon film and a barrier layer were bonded with a two-liquid curable urethane adhesive (polyester polyol and alicyclic isocyanate compound) by a dry lamination method. Further, using a two-liquid curable urethane adhesive (polyester polyol and alicyclic isocyanate compound), the obtained laminate on the barrier layer side and the resin film for electrical storage devices were bonded to each other by a dry lamination method to laminate an adhesive layer (4 µm) and the resin film for electrical storage devices on the barrier layer. Next, the obtained laminate was aged and heated to obtain an exterior material for electrical storage devices which includes a laminate in which a polyethylene terephthalate film, an adhesive agent layer, a nylon film, an adhesive agent layer, a barrier layer, an adhesive layer and a resin film for electrical storage devices are laminated in the stated order. In the heat-sealable resin layer, r-PP (water absorbent content: 20 mass%, 30 µm) and r-PP (water absorbent content: 0 mass%, 20 µm) are laminated in the stated order from the barrier layer side.

### (Example 8)

Two resin films for electrical storage devices were manufactured in the same manner as in Example 2, and used as adhesive films for metal terminal (length: 10 mm, width: 55 mm). At a center portion of an aluminum metal terminal (length: 60 mm, width: 45 mm, thickness: 400 µm) in a length direction, the metal terminal was sandwiched between the two adhesive films for metal terminal in a direction orthogonal to the length direction, and hot-pressed from both sides (under conditions of a temperature of 190°C, a pressure of 0.25 MPa, and 16 seconds) to attach the adhesive film for metal terminal to the metal terminal, thereby obtaining a metal terminal with an adhesive film for metal terminal. In the adhesive film for metal terminal, r-PP (water absorbent content: 20 mass%, 30 µm) and r-PP (water absorbent content: 0 mass%, 20 µm) are laminated in the stated order from the metal terminal side.

### (Example 9)

A random polypropylene film (water absorbent content: 0 mass%, thickness: 5 µm) was laminated to each of both surfaces of a random polypropylene film containing 15 mass% of calcium oxide (CaO) as a water absorbent (thickness: 40 µm), thereby manufacturing a resin film for electrical storage devices which has a three-layered configuration of r-PP (water absorbent content: 0 mass%, 5 µm)/r-PP (water absorbent content: 15 mass%, 40 µm)/r-PP (water absorbent content: 0 mass%, 5 µm).

### (Example 10)

A random polypropylene film (water absorbent content: 0 mass%, thickness: 90 µm) was laminated to one surface of a random polypropylene film containing 20 mass% of CaO as a water absorbent (thickness: 30 µm), thereby manufacturing a resin film for electrical storage devices which has a two-layered configuration of r-PP (water absorbent content: 0 mass%, 90 µm)/r-PP (water absorbent content: 20 mass%, 30 µm). The resin film for electrical storage devices in Example 10 is used with r-PP (water absorbent content: 0 mass%, 90 µm) disposed on the exterior material side and r-PP (water absorbent content: 20 mass%, 30 µm) disposed on the electrical storage device element side.

### (Example 11)

A random polypropylene film containing 4 mass% of calcium oxide (CaO) as a water absorbent (water absorbent content: 4 mass%, thickness: 10 µm) was laminated to each of both surfaces of a random polypropylene film containing 17.4 mass% of calcium oxide (CaO) as a water absorbent (thickness: 30 µm), thereby manufacturing a resin film for electrical storage devices which has a three-layered configuration of r-PP (water absorbent content: 4 mass%, 10 µm)/r-PP (water absorbent content: 17.4 mass%, 30 µm)/r-PP (water absorbent content: 4 mass%, 10 µm).

### (Example 12)

A random polypropylene film containing 20 mass% of CaO as a water absorbent (water absorbent content: 20 mass%, thickness: 90 µm) was laminated to one surface of a random polypropylene film (water absorbent content: 0 mass%, thickness: 30 µm) to manufacture a resin film for electrical storage devices which has a two-layered configuration of r-PP (water absorbent content: 20 mass%, 90 µm)/r-PP (water absorbent content: 0 mass%, 30 µm). The resin film for electrical storage devices in Example 12 is used with r-PP (water absorbent content: 20 mass%, 90 µm) disposed on the exterior material side and r-PP (water absorbent content: 0 mass%, 30 µm) disposed on the electrical storage device element side.

### (Example 13)

A random polypropylene film containing 45 mass% of CaO as a water absorbent (water absorbent content: 45 mass%, thickness: 30 µm) was laminated to one surface of a random polypropylene film (water absorbent content: 0 mass%, thickness: 20 µm) to manufacture a resin film for electrical storage devices which has a two-layered configuration of r-PP (water absorbent content: 45 mass%, 30 µm)/r-PP (water absorbent content: 0 mass%, 20 µm). The resin film for electrical storage devices in Example 13 is used with r-PP (water absorbent content: 45 mass%, 30 µm) disposed on the exterior material side and r-PP (water absorbent content: 0 mass%, 20 µm) disposed on the electrical storage device element side.

### (Example 14)

A random polypropylene film (water absorbent content: 0 mass%, thickness: 10 µm) was laminated to each of both surfaces of a random polypropylene film containing 20 mass% of magnesium oxide (MgO) as a water absorbent (thickness: 30 µm), thereby manufacturing a resin film for electrical storage devices which has a three-layered configuration of r-PP (water absorbent content: 0 mass%, 10 µm)/r-PP (water absorbent content: 20 mass%, 30 µm)/r-PP (water absorbent content: 0 mass%, 10 µm).

### (Example 15)

A random polypropylene film (water absorbent content: 0 mass%, thickness: 10 µm) was laminated to each of both surfaces of a random polypropylene film containing 20 mass% of magnesium sulfate (MgSO₄) as a water absorbent (thickness: 30 µm), thereby manufacturing a resin film for electrical storage devices which has a three-layered configuration of r-PP (water absorbent content: 0 mass%, 10 µm)/r-PP (water absorbent content: 20 mass%, 30 µm)/r-PP (water absorbent content: 0 mass%, 10 µm).

### (Example 16)

A maleic anhydride-modified random polypropylene film (water absorbent content: 0 mass%, thickness: 20 µm) was laminated to one surface of a random polypropylene film containing 20 mass% of CaO as a water absorbent (thickness: 30 µm), thereby manufacturing a resin film for electrical storage devices which has a two-layered configuration of r-PPa (water absorbent content: 0 mass%, 20 µm)/r-PP (water absorbent content: 20 mass%, 30 µm). The resin film for electrical storage devices in Example 16 is an adhesive film for metal terminal, and is used with r-PP (water absorbent content: 20 mass%, 30 µm) disposed on the exterior material side and r-PPa (water absorbent content: 0 mass%, 20 µm) disposed on the metal terminal side.

### (Example 17)

A maleic anhydride-modified homopolypropylene film (water absorbent content: 0 mass%, thickness: 20 µm) was laminated to one surface of a homopolypropylene film containing 20 mass% of CaO as a water absorbent (thickness: 30 µm), thereby manufacturing a resin film for electrical storage devices which has a two-layered configuration of h-PPa (water absorbent content: 0 mass%, 20 µm)/h-PP (water absorbent content: 20 mass%, 30 µm). The resin film for electrical storage devices in Example 17 is an adhesive film for metal terminal, and is used with h-PP (water absorbent content: 20 mass%, 30 µm) disposed on the exterior material side and h-PPa (water absorbent content: 0 mass%, 20 µm) disposed on the metal terminal side.

### (Example 18)

A maleic anhydride-modified random polypropylene film containing 1 mass% of CaO as a water absorbent (thickness: 20 µm) was laminated to one surface of a random polypropylene film containing 20 mass% of CaO as a water absorbent (thickness: 30 µm), thereby manufacturing a resin film for electrical storage devices which has a two-layered configuration of r-PPa (water absorbent content: 1 mass%, 20 µm)/r-PP (water absorbent content: 20 mass%, 30 µm). The resin film for electrical storage devices in Example 18 is an adhesive film for metal terminal, and is used with r-PP (water absorbent content: 20 mass%, 30 µm) disposed on the exterior material side and r-PPa (water absorbent content: 1 mass%, 20 µm) disposed on the metal terminal side.

### (Example 19)

A maleic anhydride-modified random polypropylene film (water absorbent content: 0 mass%, thickness: 10 µm) was laminated to one surface of a random polypropylene film containing 20 mass% of calcium oxide (CaO) as a water absorbent (thickness: 30 µm), and a random polypropylene film (water absorbent content: 0 mass%, thickness: 10 µm) was laminated to the other surface to manufacture a resin film for electrical storage devices which has a three-layered configuration of r-PPa (water absorbent content: 0 mass%, 10 µm)/r-PP (water absorbent content: 20 mass%, 30 µm)/r-PP (water absorbent content: 0 mass%, 10 µm). The resin film for electrical storage devices in Example 19 is an adhesive film for metal terminal, and is used with r-PP (water absorbent content: 0 mass%, 10 µm) disposed on the exterior material side and r-PPa (water absorbent content: 0 mass%, 10 µm) disposed on the metal terminal side.

### (Example 20)

A maleic anhydride-modified random polypropylene film containing a black pigment (water absorbent content: 0 mass%, thickness: 10 µm) was laminated to one surface of a homopolypropylene film containing 20 mass% of calcium oxide (CaO) as a water absorbent (thickness: 30 µm), and a random polypropylene film (water absorbent content: 0 mass%, thickness: 10 µm) was laminated to the other surface to manufacture a resin film for electrical storage devices which has a three-layered configuration of black r-PPa (water absorbent content: 0 mass%, 10 µm)/h-PP (water absorbent content: 20 mass%, 30 µm)/r-PP (water absorbent content: 0 mass%, 10 µm). The resin film for electrical storage devices in Example 20 is an adhesive film for metal terminal, and is used with black r-PPa (water absorbent content: 0 mass%, 10 µm) disposed on the metal terminal side and r-PP (water absorbent content: 0 mass%, 10 µm) disposed on the exterior material side.

### (Comparative Example 1)

A random polypropylene film containing 12 mass% of CaO as a water absorbent (water absorbent content: 12 mass%, 50 µm, single-layered configuration) was used as a resin film for electrical storage devices.

### (Comparative Example 2)

A random polypropylene film (water absorbent content: 0 mass%, 50 µm, single-layered configuration) was used as a resin film for electrical storage devices.

### (Comparative Example 3)

A random polypropylene film containing 12 mass% of CaO (water absorbent content: 12 mass%, thickness: 10 µm) was laminated to each of both surfaces of a random polypropylene film containing 12 mass% of CaO as a water absorbent (thickness: 30 µm), thereby manufacturing a resin film for electrical storage devices which has a three-layered configuration of r-PP (water absorbent content: 12 mass%, 10 µm)/r-PP (water absorbent content: 12 mass%, 30 µm)/r-PP (water absorbent content: 12 mass%, 10 µm).

### <Evaluation of water absorbency of resin film>

A 10 cm-square resin film (a resin film left to stand in a vacuum oven (-50 MPa) for 24 hours for drying immediately after it was produced) was provided, and immersed in hot water at 80°C. The amount of water absorption was calculated from the weight of the resin film before and after the immersion. When there was not a change in weight of the resin film by immersion, the water absorbent was determined as having absorbed water to full capacity. The increase in weight per unit area at that time was defined as moisture absorption performance (amount of discharge of moisture (g/m²)). The detection limit is 0.1 mg/m². The results are shown in Table 1. Moisture absorption performance (g/m2) = (weight of resin film after immersion (g) - weight of resin film before immersion (g))/area of resin film after immersion (m2)

### <Evaluation of insulation quality of resin film after absorption of water>

The insulation quality was evaluated in accordance with the provisions of JIS C 2110-1: 2016. Specifically, the test environment was set to 23°C in the air. The dielectric breakdown strength of each of five sheets of the resin film after absorption of water, which had been obtained as described in <Evaluation of water absorbency of resin film> above. Using the average of the values of the dielectric breakdown strength of the five sheets (dielectric breakdown voltage per unit), evaluation was performed by the following criteria. The results are shown in Table 1. The measurement conditions are as follows.
Pressure boosting method: short-time method (alternating-current, 50 Hz)
Pressure boosting rate: 0.3 kV/s
Electrode: 25 mmφ cylinder/75 mmφ cylinder
Apparatus: Dielectric breakdown test apparatus: YST-243-100 RHO (YAMAYOSHIKENKI COM.)

### (Evaluation criteria)

A': The dielectric breakdown strength is 100 kV/mm or more
A: The dielectric breakdown strength is 50 kV/mm or more and less than 100 kV/mm
B: The dielectric breakdown strength is 40 kV/mm or more and less than 50 kV/mm
C: The dielectric breakdown strength is less than 40 kV/mm

### (Preparation of metal terminal with adhesive film for metal terminal)

Metal terminals with an adhesive film for metal terminal were prepared with the adhesive films for metal terminal in Examples 8 and 16 to 20, respectively. An aluminum alloy foil 400 µm in thickness, 45 mm in TD and 60 mm in MD (JIS H4160: 1994 A8079H-O) was provided as a metal terminal, and plated with a treatment agent including three components: a phenol resin, a chromium (III) fluoride compound and phosphoric acid such that the treatment layer had a thickness of about 100 nm, thereby producing a surface-treated metal terminal. Next, two adhesive films for metal terminal which had been cut into a size of 10 mm in TD and 55 mm in MD were provided, and disposed on both surfaces of the surface-treated metal terminal at a position of 10 mm from the end of the surface-treated metal terminal in the length direction such that the centers of the two adhesive films for metal terminal and the surface-treated metal terminal in the width direction coincided. Next, heat-sealing was performed under the condition of 190°C × 0.25 MPa (surface pressure applied to silicon rubber) × 16 seconds using a flat plate press machine with upper and lower metal heads each provided with silicon rubber having a thickness of 3.0 mm and a hardness of 40, thereby preparing a metal terminal with an adhesive film for metal terminal in which an adhesive film for metal terminal, a surface-treated metal terminal and an adhesive film for metal terminal were laminated in this order. Here, MD of the metal terminal and MD of the adhesive film for metal terminal orthogonally crossed each other.

### <Evaluation of bondability of adhesive film for metal terminal>

First, an exterior material for electrical storage devices (hereinafter, sometimes referred to simply as an "exterior material") was produced. A base material layer (thickness: 30 µm) including a polyethylene terephthalate film (thickness: 12 µm), an adhesive agent layer (thickness: 3 µm) and a nylon film (thickness: 15 µm) was laminated onto an aluminum alloy foil (thickness: 40 µm, JIS H4160: 1994 A8079H-O) by a dry lamination method, and a heat-sealable resin layer was laminated on the other surface by co-extrusion. Specifically, a two-liquid urethane adhesive (polyol compound and aromatic isocyanate-based compound) was applied to the nylon film, so that an adhesive agent layer (thickness: 3 µm) was formed on the nylon film. Next, an adhesive agent layer and a polyethylene terephthalate film were laminated onto the nylon film to produce a base material layer. A two-liquid urethane adhesive (polyol compound and aromatic isocyanate-based compound) was then applied to one surface of a barrier layer including an aluminum alloy foil, so that an adhesive agent layer (thickness: 3 µm) was formed on the aluminum alloy foil. The adhesive agent layer and the base material layer having a bonding surface on the nylon film side were then laminated onto the aluminum alloy foil, and aging treatment was then performed to produce a laminate of base material layer/adhesive agent layer/barrier layer. Next, an adhesive layer composed of a maleic anhydride-modified polypropylene resin (thickness: 40 µm, disposed on the metal layer side) and a heat-sealable resin layer (thickness: 40 µm thick, innermost layer) composed of a random polypropylene resin were co-extruded onto the barrier layer of the laminate to laminate the adhesive layer and the heat-sealable resin layer on the barrier layer, thereby obtaining an exterior material for electrical storage devices in which a base material layer, an adhesive agent layer, a barrier layer, an adhesive layer and a heat-sealable resin layer were laminated in the stated order.

Next, the exterior material was cut into a size of 60 mm in TD and 200 mm in MD, and the exterior materials were opposed to each other with the heat-sealable resin layer on the inner side, and the obtained metal terminal with an adhesive film for metal terminal was sandwiched between the opposed heat-sealable resin layers. Here, the lamination was performed such that MD and TD of the exterior material coincided with the transverse direction and the machine direction, respectively, of the metal terminal with an adhesive film for metal terminal. In this state, heat-sealing was performed under conditions of a width of 7 mm, 190°C, 0.25 MPa and 16 seconds using a heat-seal tester, and the heat-sealed product was naturally cooled to 25 °C to obtain a laminate in which the exterior material and the adhesive film were heat-sealed. The width of 7 mm corresponds to the machine direction of the exterior material. These heat sealing conditions are temperature conditions suitable for the resins used for the adhesive film for metal terminal. The heat-sealed portion of the obtained laminate has a configuration in which an exterior material, an adhesive film for metal terminal, a metal terminal, an adhesive film for metal terminal and an exterior material are laminated in this order. Next, the laminate was cut in a direction perpendicular to a seal with a width of 7 mm to obtain a sample having a width of 15 mm. Here, the sample was obtained from the central portion of the laminate. The width of 15 mm corresponds to the transverse direction of the exterior material. Next, the exterior material on one side of the sample and the metal terminal were chucked, and the exterior material and the metal terminal were pulled in a direction of 180°C at a speed of 50 mm/min to measure the sealing strength. The measurements were made in an environment at 25°C and 50%. Sealability to the metal terminal was evaluated by the following criteria. The results are shown in Table 2.
A: Sealing strength is 20 N/15 mm or more.
B: Sealing strength is 10 N/15 mm or more and less than 20 N/15 mm.
C: Sealing strength is less than 10 N/15 mm.

**[Table 1]**

| | Laminated configuration of resin film for electrical storage devices | Ratio of thickness of layer B (layer having water absorbent content of less than 5 mass%) to total thickness | Content of absorbent in resin film for electrical storage devices (mass%) | Amount of discharge of moisture (g/m2) | Evaluation of insulation quality |
|---|---|---|---|---|---|
| Example 1 | r-PP (water absorbent content: 0 mass%, 10 30 µm)/r-PP (water absorbent content: 0 mass%, 10 µm) | 0.40 | 12 | 1.99 | A |
| Example 2 | r-PP (water absorbent content: 0 mass%, 20 µm)/r-PP (water absorbent content: 20 mass%, 30 µm) | 0.40 | 12 | 1.72 | A |
| Example 3 | r-PP (water absorbent content: 20 mass%, 30 µm)/r-PP (water absorbent content: 0 mass%, 20 µm) | 0.40 | 12 | 1.72 | A |
| Example 4 | r-PP (water absorbent content: 20 mass%, 15 µm)/r-PP (water absorbent content: 0 mass%, 20 µm)/r-PP (water absorbent content: 20 mass%, 15 µm) | 0.40 | 12 | 1.81 | A |
| Example 5 | r-PP (water absorbent content: 0 mass%, 10 30 µm)/r-PP (water absorbent content: 0 mass%, 10 µm) | 0.40 | 12 | 1.95 | A |
| Example 6 | PBT (water absorbent content: 0 mass%, 10 30 µm)/PBT (water absorbent content: 0 mass%, 10 µm) | 0.40 | 12 | 2.10 | A |
| Example 7 | As heat-sealable resin layer of exterior material, r-PP (water absorbent content: 20 mass%, 30 µm) and r-PP (water absorbent content: 0 mass%, 20 µm) in stated order from barrier layer side | 0.40 | 12 | 1.72 | A |
| Example 8 | As adhesion film for metal terminal, r-PP (water absorbent content: 20 mass%, 30 µm) and r-PP (water absorbent content: 0 mass%, 20 µm) in stated order from metal terminal side | 0.40 | 12 | 1.71 | A |
| Example 9 | r-PP (water absorbent content: 0 mass%, 5 µm)/r-PP (water absorbent content: 15 mass%, 40 µm)/r-PP (water absorbent content: 0 mass%, 5 µm) | 0.20 | 12 | 2.01 | A |
| Example 10 | r-PP (water absorbent content: 0 mass%, 90 µm)/r-PP (water absorbent content: 20 mass%, 30 µm) | 0.75 | 13 | 1.75 | A |
| Example 11 | r-PP (water absorbent content: 4 mass%, 10 µm)/r-PP (water absorbent content: 17.4 mass%, 30 µm)/r-PP (water absorbent content: 4 mass%, 10 µm) | 0.60 | 12 | 2.05 | B |
| Example 12 | r-PP (water absorbent content: 20 mass%, 90 um)/r-PP (water absorbent content: 0 mass%, 30 µm) | 0.25 | 15 | 5.20 | A |
| Example 13 | r-PP (water absorbent content: 45 mass%, 30 µm)/r-PP (water absorbent content: 0 mass%, 20 µm) | 0.40 | 27 | 4.05 | A |
| Example 14 | r-PP (water absorbent content: 0 mass%, 10 µm)/r-PP (water absorbent (MgO) content: 20 mass%, 30 µm)/r-PP (water absorbent content: 0 mass%, 10 µm) | 0.40 | 12 | 1.51 | A |
| Example 15 | r-PP (water absorbent content: 0 mass%, 10 µm)/r-PP (water absorbent (MgSO4) content: 20 mass%, 30 µm)/r-PP (water absorbent content: 0 mass%, 10 µm) | 0.40 | 12 | 2.61 | B |
| Example 16 | r-PPa (water absorbent content: 0 mass%, 20 µm)/r-PP (water absorbent content: 20 mass%, 30 µm) | 0.40 | 12 | 1.72 | B |
| Example 17 | h-PPa (water absorbent content: 0 mass%, 20 µm)/h-PP (water absorbent content: 20 mass%, 30 µm) | 0.40 | 12 | 1.60 | B |
| Example 18 | r-PPa (water absorbent content: 1 mass%, 20 µm)/r-PP (water absorbent content: 20 mass%, 30 µm) | 0.40 | 12 | 1.70 | B |
| Example 19 | r-PPa (water absorbent content: 0 mass%, 10 µm)/r-PP (water absorbent content: 20 mass%, 30 µm)/r-PP (water absorbent content: 0 mass%, 10 µm) | 0.40 | 12 | 1.69 | A |
| Example 20 | Black r-PPa (water absorbent content: 0 mass%, 10 µm)/h-PP (water absorbent content: 20 mass%, 30 µm)/r-PP (water absorbent content: 0 mass%, 10 µm) | 0.40 | 12 | 1.63 | A |
| Comparative Example 1 | r-PP (water absorbent content: 12 mass%, 50 µm, single-layered configuration) | - | 12 | 1.67 | C |
| Comparative Example 2 | r-PP (water absorbent content: 0 mass%, 50 µm, single-layered configuration) | - | 0 | Below detection limit | A' |
| Comparative Example 3 | r-PP (water absorbent content: 12 mass%, 10 µm)/r-PP (water absorbent content: 12 mass%, 30 µm)/r-PP (water absorbent content: 12 mass%, 10 µm) | - | 12 | 1.71 | C |

**[Table 2]**

| | Laminated configuration of resin film for electrical storage devices | Moisture absorption performance [g/m²] | Metal bondability |
|---|---|---|---|
| Example 8 | As adhesion film for metal terminal, r-PP (water absorbent content: 20 mass%, 30 µm) and r-PP (water absorbent content: 0 mass%, 20 µm) from metal terminal side | 1.7 | C |
| Example 16 | r-PPa (water absorbent content: 0 mass%, 20 µm)/r-PP (water absorbent content: 20 mass%, 30 µm) | 1.72 | A |
| Example 17 | h-PPa (water absorbent content: 0 mass%, 20 µm)/h-PP (water absorbent content: 20 mass%, 30 µm) | 1.60 | A |
| Example 18 | r-PPa (water absorbent content: 1 mass%, 20 µm)/r-PP (water absorbent content: 20 mass%, 30 µm) | 1.70 | B |
| Example 19 | r-PPa (water absorbent content: 0 mass%, 10 µm)/r-PP (water absorbent content: 20 mass%, 30 µm)/r-PP (water absorbent content: 0 mass%, 10 µm) | 1.69 | A |
| Example 20 | Black r-PPa (water absorbent content: 0 mass%, 10 µm)/h-PP (water absorbent content: 20 mass%, 30 µm)/r-PP (water absorbent content: 0 mass%, 10 µm) | 1.63 | A |

As described above, the present disclosure provides the invention of aspects as shown below.

Item 1. A resin film for electrical storage devices, including two or more layers, in which the two or more layers include at least one layer A having a water absorbent content of 5 mass% or more, and at least one layer B having a water absorbent content of less than 5 mass%.

Item 2. The resin film for electrical storage devices according to item 1, in which the at least one layer B has a water absorbent content of 0%.

Item 3. The resin film for electrical storage devices according to item 1 or 2, in which at least one of the two or more layers has a solid particle content of less than 5 mass%.

Item 4. The resin film for electrical storage devices according to any one of items 1 to 3, in which the water absorbent includes an inorganic water absorbent.

Item 5. The resin film for electrical storage devices according to any one of items 1 to 4, in which the water absorbent is at least one selected from the group consisting of calcium oxide, anhydrous magnesium sulfate, magnesium oxide, calcium chloride, zeolite, aluminum oxide, silica gel, alumina gel, and dried alum.

Item 6. The resin film for electrical storage devices according to any one of items 1 to 5, in which at least one of the two or more layers contains a heat-sealable resin.

Item 7. The resin film for electrical storage devices according to item 6, in which the heat-sealable resin contains at least one selected from the group consisting of polyester and polyolefin.

Item 8. The resin film for electrical storage devices according to any one of items 1 to 7, in which the resin film for electrical storage devices after water absorption has a dielectric breakdown strength of 40 kV/mm or more as measured by the following measurement method:
(measurement of dielectric breakdown strength after absorption of water)
a 10 cm-square resin film for electrical storage devices is provided, and immersed in hot water at 80°C; the immersion is continued until the water absorbent in the resin film for electrical storage devices absorbs water to full capacity, thereby obtaining a resin film for electrical storage devices after absorption of water; a waterabsorbing capacity of the resin film for electrical storage devices is calculated from a weight of the film before and after immersion; next, in accordance with the provisions of JIS C 2110-1: 2016, the dielectric breakdown strength of the resin film for electrical storage devices after absorption of water is measured under measurement conditions of measurement environment: 23°C in the air, pressure boosting method: short-time method (alternating-current, 50 Hz), pressure boosting rate: 0.3 kV/s, and electrode: 25 mmφ cylinder/75 mmφ cylinder; and a measured value is an average value for five samples.

Item 9. The resin film for electrical storage devices according to any one of items 1 to 8, in which the resin film for electrical storage devices is 1) disposed between an exterior material for electrical storage devices and an electrical storage device element, 2) used as a heat-sealable resin layer of an exterior material for electrical storage devices, 3) used as an adhesive layer between a barrier layer and a heat-sealable resin layer of an exterior material for electrical storage devices, or 4) used as an adhesive film for metal terminal which is interposed between a metal terminal electrically connected to an electrode of an electrical storage device element and an exterior material for electrical storage devices which seals the electrical storage device element.

Item 10. An electrical storage device in which an electrical storage device element including at least a positive electrode, a negative electrode and an electrolyte is housed in a packaging formed of an exterior material, in which the resin film for electrical storage devices according to any one of items 1 to 9 is disposed between the exterior material and the electrical storage device.

### Reference Signs List

1 Resin film for electrical storage devices
2 Metal terminal
3 Exterior material
3a Peripheral edge portion of exterior material
4 Electrical storage device element
10 Electrical storage device
11 First layer
12 Second layer
13 Third layer
21 Adhesive film for metal terminal
31 Base material layer
32 Adhesive agent layer
33 Barrier layer
34 Adhesive layer
35 Heat-sealable resin layer

## Claims

1. A resin film for electrical storage devices, comprising two or more layers, wherein the two or more layers include at least one layer A having a water absorbent content of 5 mass% or more, and at least one layer B having a water absorbent content of less than 5 mass%.

2. The resin film for electrical storage devices according to claim 1, wherein the at least one layer B has a water absorbent content of 0%.

3. The resin film for electrical storage devices according to claim 1 or 2, wherein at least one of the two or more layers has a solid particle content of less than 5 mass%.

4. The resin film for electrical storage devices according to claim 1 or 2, wherein the water absorbent includes an inorganic water absorbent.

5. The resin film for electrical storage devices according to claim 1 or 2, wherein the water absorbent contains at least one selected from the group consisting of calcium oxide, anhydrous magnesium sulfate, magnesium oxide, calcium chloride, zeolite, aluminum oxide, silica gel, alumina gel, and dried alum.

6. The resin film for electrical storage devices according to claim 1 or 2, wherein at least one of the two or more layers contains a heat-sealable resin.

7. The resin film for electrical storage devices according to claim 6, wherein the heat-sealable resin contains at least one selected from the group consisting of polyester and polyolefin.

8. The resin film for electrical storage devices according to claim 1 or 2, wherein the resin film for electrical storage devices after water absorption has a dielectric breakdown strength of 40 kV/mm or more as measured by the following measurement method:
(measurement of dielectric breakdown strength after absorption of water)
a 10 cm-square resin film for electrical storage devices is provided, and immersed in hot water at 80°C; the immersion is continued until the water absorbent in the resin film for electrical storage devices absorbs water to full capacity, thereby obtaining a resin film for electrical storage devices after absorption of water; a waterabsorbing capacity of the resin film for electrical storage devices is calculated from a weight of the film before and after immersion; next, in accordance with the provisions of JIS C 2110-1: 2016, the dielectric breakdown strength of the resin film for electrical storage devices after absorption of water is measured under measurement conditions of measurement environment: 23°C in the air, pressure boosting method: short-time method (alternating-current, 50 Hz), pressure boosting rate: 0.3 kV/s, and electrode: 25 mmφ cylinder/75 mmφ cylinder; and a measured value is an average value for five samples.

9. The resin film for electrical storage devices according to claim 1 or 2, wherein the resin film for electrical storage devices is 1) disposed between an exterior material for electrical storage devices and an electrical storage device element, 2) used as a heat-sealable resin layer of an exterior material for electrical storage devices, 3) used as an adhesive layer between a barrier layer and a heat-sealable resin layer of an exterior material for electrical storage devices, or 4) used as an adhesive film for metal terminal which is interposed between a metal terminal electrically connected to an electrode of an electrical storage device element and an exterior material for electrical storage devices which seals the electrical storage device element.

10. An electrical storage device in which an electrical storage device element including at least a positive electrode, a negative electrode and an electrolyte is housed in a packaging formed of an exterior material, wherein the resin film for electrical storage devices according to claim 1 or 2 is disposed between the exterior material and the electrical storage device.
